(19) Europäisches Patentamt
European Patent Office
Office européen des brevets

(11) **EP 4 475 205 B1**

(12) **EUROPEAN PATENT SPECIFICATION**

(45) Date of publication and mention
of the grant of the patent:
**01.04.2026 Bulletin 2026/14**

(51) International Patent Classification (IPC):
**H01M 4/13** (2010.01)    **H01M 4/38** (2006.01)
**H01M 10/052** (2010.01)

(21) Application number: **23209062.1**

(22) Date of filing: **10.11.2023**

(52) Cooperative Patent Classification (CPC):
**H01M 4/13; H01M 4/38; H01M 10/052;**
H01M 2004/028; Y02E 60/10

(54) **LITHIUM SECONDARY BATTERY HAVING HIGH ENERGY DENSITY**

LITHIUMSEKUNDÄRBATTERIE MIT HOHER ENERGIEDICHTE

BATTERIE SECONDAIRE AU LITHIUM À HAUTE DENSITÉ D'ÉNERGIE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.06.2023 KR 20230074500**

(43) Date of publication of application:
**11.12.2024 Bulletin 2024/50**

(73) Proprietor: **LG Energy Solution, Ltd.**
**Seoul 07335 (KR)**

(72) Inventors:
• **KANG, Da-Young**
**34122 Daejeon (KR)**
• **KIM, Bong-Soo**
**34122 Daejeon (KR)**
• **KIM, So-Young**
**34122 Daejeon (KR)**
• **AHN, Ji-Hoon**
**34122 Daejeon (KR)**
• **HAN, Jung-Hoon**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **GUO JIANQIANG ET AL: "New insights into the
relationship between capacity fading and sulfur
loading and electrolyte/sulfur ratio obtained
from Li-S pouch cell", IONICS, KIEL, DE, vol. 27,
no. 8, 17 June 2021 (2021-06-17), pages 3347 -
3356, XP037514053, ISSN: 0947-7047, [retrieved
on 20210617], DOI: 10.1007/S11581-021-04122-W**
• **SHENG-HENG CHUNG ET AL: "Progress on the
Critical Parameters for Lithium-Sulfur Batteries
to be Practically Viable", ADVANCED
FUNCTIONAL MATERIALS, WILEY - V C H
VERLAG GMBH & CO. KGAA, DE, vol. 28, no. 28,
29 May 2018 (2018-05-29), pages n/a,
XP072410598, ISSN: 1616-301X, DOI: 10.1002/
ADFM.201801188**

**Description**

TECHNICAL FIELD

The present disclosure relates to a lithium secondary battery, particularly a lithium-sulfur battery having high energy density.

BACKGROUND ART

As the applications of a lithium secondary battery expands from portable electronic devices to electric vehicle (EVs) and electric storage systems (ESSs), the demand for a lithium secondary battery with high capacity, high energy density and long lifetime is increasing.

Among various lithium secondary batteries, a lithium-sulfur battery is a battery system which uses a sulfur-based material containing a sulfur-sulfur bond as a positive electrode active material and uses lithium metal, a carbon-based material wherein intercalation/deintercalation of lithium ions occurs, silicon or tin that forms an alloy with lithium, etc. as a negative electrode active material.

In the lithium-sulfur battery, sulfur, which is the main material of the positive electrode active material, is advantageous in that it has a small weight per atom, is abundant, easily available and inexpensive, is non-toxic, and is environment-friendly.

In addition, the lithium-sulfur battery exhibits a theoretical specific capacity of 1,675 mAh/g for a positive electrode where the conversion of lithium ions and sulfur occurs ($S_8 + 16Li^+ + 16e^- \rightarrow 8Li_2S$) and a theoretical energy density of 2,600 Wh/kg for a negative electrode using lithium metal. Since it exhibits very high theoretical energy density than other currently studied battery systems (Ni-MH battery: 450 Wh/kg, Li-FeS battery: 480 Wh/kg, Li-MnO$_2$ battery: 1,000 Wh/kg, Na-S battery: 800 Wh/kg, lithium-ion battery: 250 Wh/kg), it is attracting attentions as a high-capacity, environment-friendly and inexpensive lithium secondary battery among the secondary batteries that are being developed currently.

However, the energy density is not high enough because the theoretical capacity is not fully realized due to the large amount of electrolyte, decreased efficiency of the positive electrode, degeneration of the negative electrode, etc.

Therefore, researches are being conducted continuously to realize a lithium secondary battery having high energy density.

Guo et al., Ionics (2021), 27 :3347-3356) relates to studies on the relationship between capacity fading and sulfur loading and electrolyte/sulfur ratio obtained from Li-S pouch cell.

DISCLOSURE

Technical Problem

The present disclosure is designed to solve the above-described problem, and therefore the present disclosure is directed to providing a lithium secondary battery having an improved high energy density.

Technical Solution

The above problem is solved in accordance with the subject-matter of the independent claims. Further embodiments result from the sub-claims and the following written description.

**In** an aspect, the present disclosure provides a lithium-sulfur battery according to the following exemplary embodiments.

A lithium-sulfur battery according to a first exemplary embodiment includes: an electrode assembly, an electrolyte, and a case accommodating the electrode assembly, wherein the electrode assembly, comprises a positive electrode including a sulfur-carbon composite, a negative electrode and a separator disposed between the positive electrode and the negative electrode; the lithium-sulfur battery fulfills the following requirement of equation 1:

$$[\text{equation } 1]$$

$$S_X = S_{PE} / S_{EL/S},$$

wherein $S_{PE}$ is the sulfur (S) loading amount of the positive electrode as a mAh/cm$^2$ value,
$S_{EL/S}$ is the weight ratio of the electrolyte and sulfur (S) as a dimensionless value, and

wherein $S_X$ is the sulfur (S) loading amount of the positive electrode per ratio of electrolyte and sulfur, and $S_X$ is 1.4 mAh/cm$^2$ or higher, preferably in a range between 1.4 and 10 mAh/ cm$^2$, and wherein a weight ratio of the electrolyte and sulfur (S) in the sulfur-carbon composite (El/S weight ratio) is 2.5 or less.

According to a second exemplary embodiment, in the first exemplary embodiment, the lithium-sulfur battery contains a compound comprising the following characteristic diffraction angle peaks (2θ values): $7.1 \pm 0.2°$, $9.9 \pm 0.2°$, $10.0 \pm 0.2°$, $10.4 \pm 0.2°$, $11.0 \pm 0.2°$, $11.6 \pm 0.2°$, and $12.1 \pm 0.2°$ in the X-ray diffraction (XRD) pattern at DOD 15% to DOD 80%.

In another aspect, the present disclosure provides a further lithium-sulfur battery. In a third embodiment, a lithium-sulfur battery comprising:

an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode, wherein the lithium-sulfur battery contains a compound comprising three or more of the following characteristic diffraction angle peaks (2θ values) selected from the following: $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern at DOD 15% to DOD 80%, wherein a weight ratio of the electrolyte and sulfur (S) in the sulfur-carbon composite (El/S weight ratio) is 2.5 or less.

According to a fourth exemplary embodiment, in the third exemplary embodiment, wherein the lithium-sulfur battery contains a compound comprising the following characteristic diffraction angle peaks (2θ values): $7.1 \pm 0.2°$, $9.9 \pm 0.2°$, $10.0 \pm 0.2°$, $10.4 \pm 0.2°$, $11.0 \pm 0.2°$, $11.6 \pm 0.2°$, and $12.1 \pm 0.2°$ in the X-ray diffraction (XRD) pattern at DOD 15% to DOD 80%.

According to a fifth exemplary embodiment, in any of the third to fourth exemplary embodiments, wherein the lithium-sulfur battery contains a compound comprising the following characteristic diffraction angle peaks (2θ values): $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern at DOD 15% to DOD 80%.

According to a sixth exemplary embodiment, in any of the second to fifth exemplary embodiments, the DOD 15% to DOD 80% may be a state having a potential of 1.7-2.2 V, and / or
the DOD 15% to DOD 80% may be a state having a discharge capacity per sulfur (S) weight of 150-960 mAh/g(S).

According to a seventh exemplary embodiment, in any of the first to six exemplary embodiments, the sulfur-carbon composite may have a sulfur/carbon (S/C) weight ratio of 2.3 or higher, and / or
the weight of the sulfur-carbon composite may be 90 wt% or more based on the total weight of the positive electrode.

According to an eighth exemplary embodiment, in any of the first to seventh exemplary embodiments, the positive electrode may have a sulfur (S) loading amount of 3.6 mAh/cm$^2$ or more.

According to a ninth exemplary embodiment, in any of the first to eighth exemplary embodiments, the negative electrode may have a thickness of 40-80 μm.

A weight ratio of the electrolyte and sulfur (S) in the sulfur-carbon composite (El/S weight ratio) is 2.5 or lower. According to an tenth exemplary embodiment, in any of the first to ninth exemplary embodiments, 3.6 -5.0 mAh/cm$^2$ or more.

According to a eleventh exemplary embodiment, in any of the first to tenth exemplary embodiments, the lithium-sulfur battery may have an energy density of 430 Wh/kg or higher.

According to a twelfth exemplary embodiment, in any of the first to eleventh exemplary embodiments, the lithium-sulfur battery may be a pouch-type battery or a cylindrical battery.

In another aspect, the present disclosure provides an evaluation method according to the following exemplary embodiments.

According to a thirteenth exemplary embodiment, a method for evaluating the energy density of a lithium-sulfur battery including: an electrode assembly, an electrolyte, and a case accommodating the electrode assembly, wherein the electrode assembly comprises a positive electrode including a sulfur-carbon composite, a negative electrode and a separator disposed between the positive electrode and the negative electrode; an electrolyte; and a case in which the electrode assembly is accommodated, wherein the method comprises the following steps: discharging the lithium-sulfur battery at room temperature to a state of discharge (DOD) from 15% to DOD 80%,
determining a lithium-sulfur battery containing a compound comprising three or more characteristic diffraction angle peaks (2θ values) selected from the following: $7.1 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern, preferably at DOD 15% to DOD 80%.

According to a fourteenth exemplary embodiment, in the thirteenth exemplary embodiment, the DOD 15% to DOD 80% is a state having a potential of 1.7-2.2 V, and / or

the DOD 15% to DOD 80% is a state having a discharge capacity per sulfur (S) weight of 150-960 mAh/g(S), and / or

the battery having high energy density may be a battery having an energy density of 430 Wh/kg or higher.

Advantageous Effects

A lithium-sulfur battery according to an aspect of the present disclosure has high energy density.

In particular, the lithium-sulfur battery of the present disclosure may have an energy density of 300 Wh/kg or higher, or 430 Wh/kg or higher.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not to be construed as being limited to the drawings.

FIG. 1 shows a result of evaluating discharge capacity for Example 1, Comparative Example 2 and Comparative Example 3.

FIG. 2 shows the XRD pattern of lithium-sulfur battery of Example 1. The XRD pattern is shown as a heat-map in which black color means low intensity and white or light grey color means high intensity. The XRD pattern shows how the intensity of specific 2 theta ($2\theta$) values using a X-ray wavelength of 0.709 Å (x-axis) change depending on the DOD and SOC of the lithium sulfur battery (y-axis). The diffraction angles 2 theta ($2\theta$) for the constituent materials in the lithium-sulfur batteries are shown at the top of the images in FIG. 1.

FIG. 3 shows the XRD pattern of lithium-sulfur battery of Comparative Example 1. The XRD pattern is shown as a heat-map in which black color means low intensity and white or light grey color means high intensity. The XRD pattern shows how the intensity of specific 2 theta ($2\theta$) values using a X-ray wavelength of 0.709 Å (x-axis) change depending on the DOD and SOC of the lithium sulfur battery (y-axis). The diffraction angles $2\theta$ (theta) for the constituent materials in the lithium-sulfur batteries are shown at the top of the images in FIG. 1.

FIG. 4 shows the XRD pattern of the lithium-sulfur battery of Comparative Example 2. The XRD pattern is shown as a heat-map in which black color means low intensity and white or light grey color means high intensity. The XRD pattern shows how the intensity of specific 2 theta ($2\theta$) values using a X-ray wavelength of 0.709 Å (x-axis) change depending on the DOD and SOC of the lithium sulfur battery (y-axis).

FIG. 5 shows the XRD pattern of a lithium-sulfur battery of Comparative Example 3. The XRD pattern is shown as a heat-map in which black color means low intensity and white or light grey color means high intensity. The XRD pattern shows how the intensity of specific 2 theta ($2\theta$) values using a X-ray wavelength of 0.709 Å (x-axis) change depending on the DOD and SOC of the lithium sulfur battery (y-axis).

FIG. 6A shows the XRD pattern of example 1 at DOD 22% of the lithium-sulfur battery.

FIG. 6B shows the same XRD pattern of example 1 as in FIG 6A, wherein some peaks have been labelled, at DOD 22% of the lithium-sulfur battery.

FIG. 7A shows the XRD pattern of comparative example 1, at DOD 22% of the lithium-sulfur battery.

FIG. 7B shows the XRD pattern of comparative example 2, at DOD 22% of the lithium-sulfur battery.

FIG. 7C shows the XRD pattern of comparative example 3, at DOD 22% of the lithium-sulfur battery.

BEST MODE

Hereinafter, the present disclosure is described in more detail.

The terms or words used in the present specification and claims should not be construed as being limited to their ordinary or dictionary meanings, and should be interpreted as meanings and concepts consistent with the technical idea of the present disclosure based on the principle that an inventor may properly define the concept of terms to best explain his/her invention.

Unless otherwise restricted, a detailed description defining or specifying the elements may be applied to all inventions and is not limited to descriptions of particular inventions. That is, the present disclosure also refers to combinations of the embodiments even if they are disclosed separately. In addition, throughout the specification, when a part is described to "include (or comprise)", "have" or "be equipped with" a certain component, it means that it can further include other components rather than excluding other components, unless stated otherwise.

In addition, as used throughout the present specification, the terms such as 'about', 'substantially', etc. are used to indicate that the stated numerical value is close to a specific value within the allowable error, and are used to aid in the understanding of the present disclosure and prevent improper use of the present disclosure by an unscrupulous infringer.

Throughout the present specification, the description 'A and/or B' means 'A or B' or 'A and B'.

Throughout the present specification, temperature is indicated on the Celsius scale, in °C unit, unless specified otherwise.

The term "composite" used in the present specification refers to a material which exhibits more effective functions as two or more different materials are combined to form physically or chemically different phases.

The term "(poly)sulfide" as used herein is the concept that covers "(poly)sulfide ion ($S_x{}^{2-}$, $1 \leq x \leq 8$)" and "lithium (poly)sulfide ($Li_2S_x$ or $Li_2S_x{}^-$ $1 \leq x \leq 8$)". x may be a positive rational number, like 1, 1.5, 1.7, 2, 2.5, etc. within the above defined ranges (e.g. $Li_2S_{1.5}$, $Li_2S_3$, $Li_2S_4$, etc.). Preferably, x may be an integer, like 1, 2, 3, 4, 5, 6, 7 and 8 within the above defined ranges. (Poly)sulfide may be also formed by clusters containing more than one (poly)sulfide and / or lithium (poly) sulfide.

The term "polysulfide" as used herein is the concept that covers "polysulfide ion ($S_x{}^{2-}$, $1 < x \leq 8$)" and "lithium polysulfide ($Li_2S_x$ or $Li_2S_x{}^-$ $1 < x \leq 8$)". x may be a positive rational number, like 1, 1.5, 1.7, 2, 2.5, etc. within the above defined ranges (e.g. $Li_2S_{1.5}$, $Li_2S_3$, $Li_2S_4$, etc.). Preferably, x may be an integer, like 1, 2, 3, 4, 5, 6, 7 and 8 within the above defined ranges.

In an aspect, the present disclosure provides a lithium-sulfur battery having high energy density.

The lithium-sulfur battery according to an aspect of the present disclosure includes: an electrode assembly, an electrolyte, and a case accommodating the electrode assembly, wherein the electrode assembly includes a positive electrode including a sulfur-carbon composite, a negative electrode and a separator disposed between the positive electrode and the negative electrode; and

wherein the lithium-sulfur battery may fulfill the following requirement of equation 1:

$$[\text{equation 1}]$$

$$S_X = S_{PE} / S_{EL/S},$$

wherein

$S_{PE}$ is the sulfur (S) loading amount of the positive electrode as a mAh/cm$^2$ value, $S_{EL/S}$ is the weight ratio of the electrolyte and sulfur (S) as a dimensionless value, and wherein

$S_X$ is the sulfur (S) loading amount of the positive electrode per ratio of electrolyte and sulfur, and $S_X$ is 1.4 mAh/cm$^2$ or higher, preferably in a range between 1.4 and 10 mAh/ cm$^2$, more preferably in a range between 1.5 and 6 mAh/ cm$^2$, even more preferably in a range between 1.6 and 4 mAh/ cm$^2$, especially more preferably in a range between 1.7 and 2.5 mAh/ cm$^2$.

The weight ratio of the electrolyte (El) per sulfur (S) in the sulfur-carbon composite of the positive electrode (El/S weight ratio) may be the reciprocal value of S/El, wherein S/El may reflect the concentration of sulfur in gram in the electrolyte solution in gram. Thus, S/El may be equivalent to 1/(El/S).

The positive electrode loading ($S_{PE}$) given in mAh/cm$^2$ also reflects a type of concentration, considering that the amount of sulfur is linked to the mAh of the lithium-sulfur battery. Thus, $S_X$ reflects the concentration of sulfur in the battery per positive electrode. The physical dimension of $S_X$ is mAh/cm$^2$.

The lithium-sulfur battery fulfilling equation 1 may provide a high energy density lithium-sulfur battery, especially when $S_X$ is 1.4 mAh/cm$^2$ or higher. The lithium-sulfur battery containing the compound with characteristic XRD peaks as mentioned above may fulfill equation 1.

In one embodiment of the present disclosure, the positive electrode may have a sulfur (S) loading amount of 3.6 mAh/cm$^2$ or more, preferably in the range between above 3.5 mAh/cm$^2$ and 5 mAh/cm$^2$, preferably in the range between 3.6-5.0 mAh/cm$^2$, more preferably in the range between 3.7-4.5 mAh/cm$^2$, even more preferably in the range between 3.7-4.0 mAh/cm$^2$, although the present disclosure is not limited thereto. A lithium-sulfur battery containing sulfur according to the above-described sulfur (S) loading amount may provide a lithium-sulfur battery having an improved high energy density. Furthermore, lithium-sulfur battery containing sulfur according to the above-described sulfur (S) loading amount may provide a lithium-sulfur battery with a specific lithium (poly)sulfide compound, that may be crystalline, as it is described by XRD in the following.

The loading amount of sulfur may be a value calculated from the total weight of sulfur (S) contained as a positive electrode active material in the positive electrode and the capacity value of the electrode calculated from this. At this time, the weight of sulfur in the positive electrode may be measured from the positive electrode active material added during the manufacturing step, or may be measured through thermogravimetric analysis (TGA) on the positive electrode after manufacturing. Meanwhile, when disassembling a manufactured lithium-sulfur battery, the charged lithium-sulfur battery is disassembled under an inert atmosphere to obtain a positive electrode, and then the positive electrode is washed and dried using an appropriate cleaning solvent, and then the positive electrode active material layer is scraped off. The content of sulfur (S) derived from the active material can be measured and calculated through thermogravimetric analysis (TGA) of the obtained result, but the measurement method is not limited to this.

In one aspect, a lithium-sulfur battery comprising:

an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode,, wherein the lithium-sulfur battery contains a compound comprising three or more characteristic diffraction angle peaks (2θ values) selected from the following: $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern at DOD 15% to DOD 80%.

In one embodiment of the present disclosure, the positive electrode may include a compound having three or more characteristic peaks selected from diffraction angles (2θ values) $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern. In other words, the positive electrode may include a compound having three or more characteristic peaks selected from 7.1, 9.0, 9.4, 9.6, 9.9, 10.0, 10.4, 11.0, 11.6, 12.1, 13.3, 14.5 and $15.0 \pm 0.2°$ 2θ measured by X-ray diffraction (XRD).

Therein, $\pm 0.2°$, preferably $\pm 0.1°$, indicates the error margin of 2θ measured by X-ray diffraction (XRD). In one embodiment, the X-ray diffraction (XRD) pattern may be measured using a X-ray wavelength of 0.709 Å by X-ray diffraction (XRD). A detailed measurement method is described below.

In one preferred embodiment of the present disclosure, the positive electrode may include a compound having three or more characteristic peaks selected from diffraction angles (2θ values) $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern at DOD 15% to DOD 80%.

The lithium-sulfur battery according to an aspect of the present disclosure may include a compound having the above-described XRD pattern in the discharged state. The lithium-sulfur battery may include inorganic sulfur ($S_8$) as a positive electrode active material. In the lithium-sulfur battery lithium (poly)sulfide may be formed through reduction at the positive electrode during discharge. The compound may be crystalline form of lithium (poly)sulfide formed through reduction of inorganic sulfur ($S_8$). The lithium-sulfur battery according to an aspect of the present disclosure may exhibit high energy density because it may include crystalline form of lithium (poly)sulfide which has the above-described XRD pattern in the discharged state.

In an exemplary embodiment of the present disclosure, the compound may be crystalline form of lithium (poly) sulfide, preferably lithium polysulfide. The compound may be obtained when the lithium-sulfur battery has a DOD 15% to DOD 80%.

In the present specification, the compound may be defined as a crystalline form of lithium (poly)sulfide having three or more characteristic peaks selected from diffraction angles (2θ values) $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern.

In an exemplary embodiment of the present disclosure, the compound may be a crystalline form of lithium (poly) sulfide formed under a high energy density condition during the discharge of a lithium-sulfur battery having high energy density. For example, the lithium-sulfur battery having high energy density may have a low El/S (electrolyte/sulfur) ratio as will be described later and a crystalline form exhibiting the characteristic diffraction angle peaks in the XRD pattern may be formed as the lithium (poly)sulfide formed during the operation of the lithium-sulfur battery is dissolved in the low-content electrolyte at a high concentration, although the mechanism of the formation of the compound is not limited thereto.

In an exemplary embodiment of the present disclosure, the compound may have four or more, for example, five or more, characteristic peaks selected from the diffraction angles (2θ values) described above. Specifically, it may have 3, 4, 5, 6, 7, 8, 9, 10, 11, 12 or 13 characteristic peaks.

In an exemplary embodiment of the present disclosure, the compound may include diffraction angles (2θ values) $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the XRD pattern.

In an exemplary embodiment of the present disclosure, the compound may have diffraction angles (2θ values) $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the XRD pattern.

In one embodiment of the present disclosure, the lithium-sulfur battery may contain a compound comprising the following characteristic diffraction angle peaks (2θ values): $7.1 \pm 0.2°$, $9.9 \pm 0.2°$, $10.0 \pm 0.2°$, $11.0 \pm 0.2°$, $11.6 \pm 0.2°$, and $12.1 \pm 0.2°$ in the X-ray diffraction (XRD) pattern, preferably at DOD 15% to DOD 80%. In other words, the lithium-sulfur battery may include a compound comprising the following characteristic peaks: 7.1, 9.9, 10.0, 11.0, 11.6, $12.1 \pm 0.2°$ 2θ measured by X-ray diffraction (XRD), preferably at DOD 15% to DOD 80%.

Therein, $\pm 0.2°$, preferably $\pm 0.1°$, indicates the error margin of 2θ measured by X-ray diffraction (XRD).

In one embodiment, the X-ray diffraction (XRD) pattern may be measured using a X-ray wavelength of 0.709 Å by X-ray diffraction (XRD). A detailed measurement method is described below.

The intensity of the selected peaks may be the highest when measured in the X-ray diffraction (XRD) pattern at DOD 15% to DOD 80%. The compound may be crystalline form of lithium (poly)sulfide formed through reduction of inorganic sulfur ($S_8$). The lithium-sulfur battery according to an aspect of the present disclosure may exhibit high energy density because it includes crystalline form of lithium (poly)sulfide which has the above-described XRD pattern in the discharged state.

In one embodiment of the present disclosure, the lithium-sulfur battery contains a compound comprising, preferably consisting of, the following characteristic diffraction angle peaks ($2\theta$ values): $7.1 \pm 0.2°$, $9.0 \pm 0.2°$, $9.4 \pm 0.2°$, $9.6 \pm 0.2°$, $9.9 \pm 0.2°$, $10.0 \pm 0.2°$, $10.4 \pm 0.2°$, $11.0 \pm 0.2°$, $11.6 \pm 0.2°$, $12.1 \pm 0.2°$, $13.3 \pm 0.2°$, $14.5 \pm 0.2°$ and $15.0 \pm 0.2°$ in the X-ray diffraction (XRD) pattern, preferably at DOD 15% to DOD 80%. The intensity of the selected peaks may include peaks which may be measured in the X-ray diffraction (XRD) pattern at DOD 15% to DOD 80%. The compound may be crystalline form of lithium (poly)sulfide formed through reduction of inorganic sulfur ($S_8$). The lithium-sulfur battery according to an aspect of the present disclosure may exhibit high energy density because it includes crystalline form of lithium (poly)sulfide which has the above-described XRD pattern in the discharged state.In an exemplary embodiment of the present disclosure, the compound may be included on at least one of the inner surfaces of the positive electrode, the negative electrode, the separator, the electrolyte and the case of the lithium-sulfur battery, and the XRD pattern may be obtained through non-destructive analysis of the lithium-sulfur battery. That is to say, the XRD pattern may be measured without disassembling the lithium-sulfur battery.

In an exemplary embodiment of the present disclosure, the XRD pattern may be obtained from the lithium-sulfur battery. Specifically, the XRD pattern may be obtained through non-destructive analysis of the lithium-sulfur battery. For example, it may be obtained through operando X-ray diffraction (operando XRD) analysis. More specifically, the XRD pattern may be obtained by measuring 2 theta ($2\theta$) values in the range of 7-17° at room temperature (23 °C) using Mo K-alpha X-ray ($\lambda = 0.709$ Å) of PANalyical Empyrean XRD in transmission mode. Thus, the X-ray diffraction (XRD) pattern may be measured using a X-ray wavelength of 0.709 Å by X-ray diffraction (XRD). Each pattern may be obtained for a total of 3 minutes at 0.014° intervals. Therein, the error margin for $2\theta$ measured by X-ray diffraction (XRD) may be $\pm 0.2°$, preferably $\pm 0.1°$.

In an aspect of the present disclosure, since the compound having the XRD pattern is included in the discharged state of the lithium-sulfur battery, the XRD measurement and the charge/discharge of the lithium-sulfur battery may be conducted at the same time. Specifically, the XRD measurement may be conducted continuously while the lithium-sulfur battery is being charged/discharged.

More specifically, the XRD pattern can be obtained from real-time charge/discharge XRD measurement results using Operando X-ray diffraction.

In an exemplary embodiment of the present disclosure, when the lithium-sulfur battery is a pouch-type battery, a pressing jig equipped with a Be window may be used for the XRD measurement during the operation of the lithium-sulfur battery, although the present disclosure is not limited thereto.

As described above, the XRD pattern of the compound may be obtained in the discharged state of the lithium-sulfur battery. The discharged state for obtaining the XRD pattern is a state of DOD (depth of discharge) 15% to DOD 80%.

In the present specification, the state of DOD 15% to DOD 80% refers to a state in which the lithium-sulfur battery is discharged by 15-80% from the fully charged state, i.e., SoC (state of charge) 100%.

In one embodiment of the present invention, for ease of detection of the characteristic peak of the compound, the XRD peak can be detected in any discharge state of the lithium-sulfur battery, for example, DOD 20% to DOD 60% or XRD peaks can be detected at DOD 20% to DOD 50%. For example, the XRD peak of the compound may be detected when the lithium-sulfur battery is in a DOD of 22%, but the present invention is not limited to a specific discharge state.

In an exemplary embodiment of the present disclosure, the DOD 15% may be a state with a potential of 2.2 V or lower, and the state of DOD 15% to DOD 80% may be, for example, a state with a potential of 1.7-2.2 V, although the present disclosure is not limited thereto.

In an exemplary embodiment of the present disclosure, the total discharge capacity of the lithium-sulfur battery may be 1,000 mAh/g(S) or higher per sulfur (S) weight. For example, the total discharge capacity of the lithium-sulfur battery may be 1,000-1,300 mAh/g(S), specifically 1,100-1,200 mAh/g(S), e.g., 1,180 mAh/g(S), per sulfur (S) weight. The DOD 15% may be a state of 15% of the total discharge capacity, and the DOD 80% may be a state of 80% of the total discharge capacity. For example, the state of DOD 15% to DOD 80% may be a state with a discharge capacity of 150-960 mAh/g(S) per sulfur (S) weight.

As described above, the lithium-sulfur battery including a compound which has the characteristic peaks in the XRD pattern in the state of DOD 15% to DOD 80% may exhibit high energy density.

Next, the components of the lithium-sulfur battery are described in detail.

**Positive electrode**

In an exemplary embodiment of the present disclosure, the positive electrode may include a positive electrode current collector and a positive electrode active material layer coated on one or both sides of the positive electrode current collector.

The positive electrode current collector is not specially limited as long as it supports the positive electrode active material and exhibits high conductivity without causing chemical change in the battery. For example, copper, stainless steel, aluminum, nickel, titanium, palladium, sintered carbon, copper or stainless steel surface-treated with carbon, nickel, silver, etc., aluminum-cadmium alloy, etc. may be used.

Fine irregularities may be formed on the surface of the positive electrode current collector to strengthen the binding force with the positive electrode active material. Various forms such as a film, a sheet, a foil, a mesh, a net, a porous body, a foam, a nonwoven, etc. may be used.

The positive electrode active material layer includes the positive electrode active material and may further include a conductive material, a binder, an additive, etc.

In an exemplary embodiment of the present disclosure, the positive electrode active material includes a sulfur-carbon composite.

In an exemplary embodiment of the present disclosure, the sulfur-carbon composite may include: a porous carbon material; and a sulfur-based compound supported on at least one of the inner pores of the porous carbon material and the external surface of the porous carbon material. Since the sulfur acting as the positive electrode active material lacks electrical conductivity on its own, it may be composited with a conductive material such as a carbon material, and a porous carbon material may be used to support the sulfur. In addition, the sulfur-based compound is added as a positive electrode active material and may include, for example, one or more of inorganic sulfur ($S_8$), lithium (poly)sulfide, preferably lithium sulfide ($Li_2S$) or lithium polysulfide ($Li_2S_x$, $2 \leq x \leq 8$), a disulfide compound and a carbon-sulfur polymer (($C_2S_y)_n$, $2.5 \leq y \leq 50$, $n \geq 2$). Specifically, the sulfur-based compound may be inorganic sulfur ($S_8$).

In an exemplary embodiment of the present disclosure, the porous carbon material is not specially limited in type as long as it is a porous carbon material capable of improving the conductivity of the positive electrode while uniformly and stably supporting the sulfur-based compound as the positive electrode active material.

The porous carbon material may be generally prepared by carbonizing various precursors of carbon materials. The porous carbon material includes irregular pores therein. The pores may have an average diameter of 1-200 nm and a porosity corresponding to 10-90 vol% of the total volume of the porous carbon material. If the average diameter of the pores is smaller, the impregnation of sulfur is impossible because the pore size is only at a molecular level. In contrast, if the average diameter exceeds the above range, it is undesirable for preparation of an electrode because the mechanical strength of the porous carbon material is decreased.

In an exemplary embodiment of the present disclosure, the 'average diameter of the pores' may be measured by a method of measuring the diameter of the pores of a porous material known in the art without special limitation. For example, the diameter of the pores may be measured by scanning electron microscopy (SEM), field emission electron microscopy, laser diffraction method or BET (Brunauer-Emmett- Teller) method. The measurement using the laser diffraction method may be conducted using, for example, a commercially available laser diffraction particle size analyzer (e.g., Microtrac MT 3000). In addition, a BELSORP series analyzer (BEL Japan) may be used for measurement by the BET method, although not being limited thereto.

In an exemplary embodiment of the present disclosure, the 'porosity' refers to the ratio of the volume occupied by pores to the total volume of a structure in % unit, and may be used interchangeably with the terms pore ratio, degree of porosity, etc. In the present disclosure, the method for measuring porosity is not specially limited. In an exemplary embodiment of the present disclosure, it may be measured by the BET method using nitrogen gas, mercury (Hg) porosimetry or ASTM D2873.

The porous carbon material may be spherical, rod-shaped, needle-shaped, tube-shaped or bulk-type and is not limited in shape as long as it is one commonly used in a lithium-sulfur battery.

The porous carbon material may be any one commonly used in the art, which has a porous structure and a large specific surface area. For example, the porous carbon material may be one or more selected from a group consisting of graphite; graphene; carbon black such as denka black, acetylene black, ketjen black, channel black, furnace black, lamp black, thermal black, etc.; carbon nanotube (CNT) such as single-walled carbon nanotube (SWCNT), multi-walled carbon nanotube (MWCNT), etc.; carbon fiber such as graphite nanofiber (GNF), carbon nanofiber (CNF), activated carbon fiber (ACF), etc.; graphite such as natural graphite, artificial graphite, expandable graphite, etc.; and activated carbon, although not being limited thereto. Specifically, the porous carbon material may be carbon nanotube.

In an exemplary embodiment of the present disclosure, the porous carbon material may include, for example, carbon nanotube (CNT).

In an exemplary embodiment of the present disclosure, the sulfur-carbon composite may have a sulfur/carbon (S/C) weight ratio of, for example, 2.3 or higher. For example, the sulfur-carbon composite may have the S/C weight ratio of 2.3. The S/C weight ratio may be calculated from the weight of sulfur in gram (g) of the sulfur-carbon composite and from the weight of carbon in gram (g) of the sulfur-carbon composite. Alternatively, the S/C weight ratio may be calculated from the weight% of sulfur based on the total amount of the sulfur-carbon composite and from the weight% of carbon based on the total amount of the sulfur-carbon composite. The sulfur/carbon weight ratio (S/C weight ratio) may be dimensionless.

In a preferred embodiment of the present disclosure, the sulfur-carbon composite may have a sulfur/carbon weight ratio (S/C weight ratio) in the range between 0.5 and 5.0, between 0.5 and 4.0, between 1.0 and 3.0, between 1.5 and 2.5, between 2.0 and 2.45, between 2.25 and 2.35, like between 2.3 and 3. The S/C weight ratio may be obtained from the $S_8$/ conductive material weight ratio, when the lithium-sulfur battery is manufactured, wherein the conductive materials is preferably CNT, as discussed below.

When the S/C ratio of the sulfur-carbon composite is within the above ranges, it may be advantageous in that the electron transfer ability (conductivity) and electrochemical specific surface area of the sulfur-carbon composite can be ensured. For example, it may be advantageous in that the elution of sulfur from the positive electrode is suppressed as the usable surface of the sulfur-carbon composite increases, although the present disclosure is not limited thereto.

The sulfur-carbon composite may be prepared by a method commonly used in the art without special limitation. For example, the composite may be prepared by simply mixing sulfur and a porous carbon material and then heat-treating the mixture.

The positive electrode active material may further include one or more selected from a transition metal element, a group IIIA element, a group IVA element, sulfur compounds of these elements, and alloys of these elements with sulfur.

The transition metal element may include Sc, Ti, V, Cr, Mn, Fe, Co, Ni, Cu, Zn, Y, Zr, Nb, Mo, Tc, Ru, Rh, Pd, Os, Ir, Pt, Au, Hg, etc., the group IIIA element may include Al, Ga, In, Ti, etc., and the group IVA element may include Ge, Sn, Pb, etc.

In an exemplary embodiment of the present disclosure, the content of the sulfur-carbon composite may be 50 wt% or more based on the total weight of the positive electrode. Specifically, the content of the sulfur-carbon composite may be, for example, 80 wt% or more, 90 wt% or more or 95 wt% or more, based on the total weight of the positive electrode. The sulfur-carbon composite may be included at a content of specifically 80-100 wt%, more specifically 85-99 wt%, 90-99 wt%, 95-98 wt%, 95-97 wt% or 96 wt% based on the total weight of the positive electrode active material layer. If the content of the sulfur-carbon composite is below the above ranges, it is difficult to embody a battery with high capacity and high energy density because the relative content of subsidiary materials such as the conductive material, a binder, etc. is increased and the content of the sulfur-carbon composite is decreased. And, if the content exceeds the above ranges, there is a problem that the physical properties of the electrode are deteriorated due to the relatively low content of the conductive material or binder.

The conductive material serves as a path for electrons to move from a current collector to the positive electrode active material by electrically connecting an electrolyte and the positive electrode active material. Any material which is physically distinguished from the carbon contained in the sulfur-carbon composite and has conductivity may be used without limitation.

In an exemplary embodiment of the present disclosure, the conductive material may be, for example, carbon black such as Super-P, denka black, acetylene black, ketjen black, channel black, furnace black, lamp black, thermal black, etc.; carbon derivatives such as carbon nanotubes, fullerene, etc.; conductive fibers such as carbon fiber, metal fiber, etc.; fluorocarbons; metal powders such as, aluminum and nickel powder; conductive polymers such as polyaniline, polythiophene, polyacetylene, polypyrrole, etc.; or combinations thereof.

In an embodiment of the present disclosure, the amount of the conductive material may be 0 to 40 weight%, for example, 1 to 40 weight%, 15 to 40 weight%, 20 to 40 weight%, 25 to 35 weight%, based on the total weight of the positive electrode active material. If the content of the conductive material is below the above ranges, voltage and capacity may decrease because the electron transfer between the positive electrode active material and the current collector is not easy. On the contrary, if it exceeds the above ranges, the total energy (charge) of the battery may decrease due to the relatively decreased proportion of the positive electrode active material. Therefore, it is preferred that an appropriate content is determined within the above ranges.

In an exemplary embodiment of the present disclosure, the binder retains the positive electrode active material in the positive electrode current collector and increases binding between them by organically connecting the positive electrode active material. Any binder known in the art may be used.

For example, as the binder, a fluorine resin-based binder including polyvinylidene fluoride (PVDF), a polyvinylidene fluoride-based polymer containing at least one vinylidene fluoride as a repeating unit, polytetrafluoroethylene (PTFE) or mixtures thereof; a rubber-based binder including styrene-butadiene rubber (SBR), acrylonitrile-butadiene rubber and styreneisoprene rubber; an acrylic binder; a cellulose-based binder including carboxymethyl cellulose (CMC), starch, hydroxypropyl cellulose and regenerated cellulose; a polyalcohol-based binder; a polyolefin-based binder including polyethylene and polypropylene; a polyimide-based binder; a polyester-based binder; a silane-based binder; a polyacrylic acid-based binder; a polyacrylonitrile-based binder; and mixtures or copolymers thereof may be used.

In an exemplary embodiment of the present disclosure, the content of the binder may be 1-10 weight% based on the total weight of the positive electrode active material layer. If the content of the binder is below the above range, the positive electrode active material and the conductive material may be separated because the physical properties of the positive electrode worsen. And, if it exceeds the above range, the battery capacity may decrease as the relative ratio of the positive electrode active material and the conductive material in the positive electrode is decreased. Therefore, it is desired that an appropriate content is determined within the above range.

In the present disclosure, the method for preparing the positive electrode for a lithium secondary battery is not particularly limited. It may be prepared by methods known to those skilled in the art or modifications thereof.

As an example, the positive electrode for a lithium secondary battery may be prepared by preparing a positive electrode slurry composition with the composition described above and then forming a positive electrode active material layer by coating it on at least one surface of a positive electrode current collector.

The positive electrode slurry composition contains the positive electrode active material described above and may further contain a binder, a conductive material and a solvent.

As the solvent, one that can uniformly disperse the positive electrode active material is used. As the solvent, water is the most preferred as a water-based solvent. The water may be distilled water or deionized water. However, the present disclosure is not necessarily limited thereto and, if necessary, a low-grade alcohol that can be easily mixed with water may be used. As the low-grade alcohol, methanol, ethanol, propanol, isopropanol, butanol, etc. may be used, and they can be specifically mixed with water.

The content of the solvent may be at a level allowing easy coating, and the specific content varies depending on the coating method and device.

The positive electrode slurry composition may further contain materials commonly used for improving functions if necessary. For example, it may contain a viscosity modifier, a glidant, a filler, etc.

The method for coating the positive electrode slurry composition is not specially limited in the present disclosure. For example, doctor blading, die casting, comma coating, screen printing, etc. may be used. In addition, the positive electrode slurry may be formed on a separate substrate and then coated on a positive electrode current collector by pressing or lamination.

After coating, a drying process may be performed to remove the solvent. The drying process is performed under the temperature and time conditions where the solvent can be removed enough, although the conditions are not specially limited in the present disclosure. As an example, the drying may be performed by drying with warm air, hot air or low-humidity air, vacuum drying, drying by (far) infrared radiation or electron beam radiation, etc. The drying speed is usually adjusted such that the solvent can be removed as quickly as possible within a speed range that does not cause cracks in the positive electrode active material layer or peeling of the positive electrode active material layer from the positive electrode current collector due to stress concentration.

Additionally, the density of the positive electrode active material in the positive electrode may be increased by pressing the current collector after the drying. The pressing may be performed by mold pressing, roll pressing, etc. The positive electrode, specifically the positive electrode active material layer, prepared as described above may have a porosity of 50-80 vol%, specifically 60-75 vol%. If the porosity of the positive electrode is below 50 vol%, enough electrolyte that can exhibit ionic conductivity and/or electrical conductivity cannot be maintained between the positive electrode active material because of excessively increased filling degree of the positive electrode slurry composition containing the positive electrode active material, the conductive material and the binder. As a result, the output characteristics or cycle characteristics of the battery may be negatively affected and the overvoltage and discharge capacity reduction of the battery may become severe. On the contrary, if the porosity of the positive electrode exceeds 80 vol%, adhesivity and reactivity may decrease due to decreased physical and electrical connection with the current collector and the energy density of the battery may decrease as the electrolyte is filled in the pores. Accordingly, the porosity is adjusted appropriately within the above ranges.

**Negative electrode**

The negative electrode may include a negative electrode current collector and a negative electrode active material layer coated on one or both sides of the negative electrode current collector. Alternatively, the negative electrode may be a lithium metal plate.

The negative electrode current collector is for supporting the negative electrode active material layer and is the same as described in the case of the positive electrode current collector.

The negative electrode active material layer may include, in addition to a negative electrode active material, a conductive material, a binder, etc. The conductive material, binder, etc. are the same as described above.

The negative electrode active material may include a material that can reversibly intercalate or deintercalate lithium ions ($Li^+$), a material that can reversibly form a lithium-containing compound by reacting with lithium ions, lithium metal or a lithium alloy.

The material that can reversibly intercalate or deintercalate lithium ions ($Li^+$) may be, for example, crystalline carbon, amorphous carbon or a mixture thereof. The material that can reversibly form a lithium-containing compound by reacting with lithium ions ($Li^+$) may be, for example, tin oxide, titanium nitrate or silicon. The lithium alloy may be, for example, an alloy of lithium (Li) with a metal selected from a group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Specifically, the negative electrode active material may be lithium metal, and may be specifically in the form of a lithium metal thin film or a lithium metal powder.

In an exemplary embodiment of the present disclosure, the negative electrode may have a thickness of 40-80 $\mu$m. For example, the thickness of the negative electrode may be 50-70 $\mu$m or 60 $\mu$m. The thickness of the negative electrode may be measured by any known means for measuring the thickness of the components of a battery. For example, it may be measured using a Mitutoyo's thickness meter, although not being limited thereto. In the present disclosure, the thickness of the negative electrode may be measured according to ASTM D374.

## Separator

The separator separates or insulates the positive electrode and the negative electrode from each other and enables the transport of lithium ions between the positive electrode and the negative electrode. It may be made of a porous nonconductive or insulating material and any one that is commonly used as a separator in a lithium secondary battery may be used without special limitation. The separator may be an independent member such as a film and may also be a coating layer added to the positive electrode and/or negative electrode.

Specifically, the separator may be one having low resistance to the transport of ions in the electrolyte and having excellent ability to absorb the electrolyte.

In an exemplary embodiment of the present disclosure, the separator may include a porous substrate. The porous substrate may be any porous substrate commonly used in a secondary battery and a porous polymer film may be used alone or in a laminated manner. For example, a nonwoven fabric made of a high-melting-point glass fiber, a polyethylene terephthalate fiber, etc. or a polyolefin-based porous membrane may be used, although not being limited thereto.

The material of the porous substrate is not specially limited in the present disclosure, and any porous substrate commonly used in an electrochemical device may be used. For example, the porous substrate may be made of one or more material selected from a group consisting of polyolefin such as polyethylene, polypropylene, etc., polyester such as polyethylene terephthalate, polybutylene terephthalate, etc., polyamide, polyacetal, polycarbonate, polyimide, polyether ether ketone, polyethersulfone, poly(phenylene oxide), polyphenylene sulfide, polyethylene naphthalate, polytetrafluoroethylene, polyvinylidene fluoride, polyvinyl chloride, polyacrylonitrile, cellulose, nylon, poly(p-phenylene benzobisoxazole) and polyarylate.

In an exemplary embodiment of the present disclosure, the thickness of the porous substrate is not specially limited but may be 1-100 $\mu$m, specifically 5-50 $\mu$m. Although the thickness of the porous substrate is not limited to the above ranges, if the thickness is below the lower limit described above, the separator may be damaged easily during the operation of the battery due to deteriorated mechanical properties.

In an exemplary embodiment of the present disclosure, the porous substrate may have an average pore diameter of 0.001-50 $\mu$m and a porosity 10-95 vol%, although not being specially limited thereto.

In an exemplary embodiment of the present disclosure, the separator may further include a porous coating layer which is formed on at least one side of the porous substrate and includes an inorganic particle and a binder.

In an exemplary embodiment of the present disclosure, the inorganic particle and the binder included in the porous coating layer are not specially limited as long as they are those commonly used in the porous coating layer of a separator and methods for preparing the same are not specially limited.

## Electrolyte

The electrolyte is a medium in which ions involved in the electrochemical reaction of a lithium-sulfur battery can move and includes a non-water-based solvent and a lithium salt as an electrolyte.

The electrolyte is not specially limited as long as it is one that can be used in a lithium secondary battery, specifically a lithium-sulfur battery.

In an exemplary embodiment of the present disclosure, the electrolyte may include a non-water-based solvent, a lithium salt and an additive.

In an exemplary embodiment of the present disclosure, the non-water-based solvent is not specially limited as long as it is one that can be used in a lithium-sulfur battery. For example, an ether-based solvent, an ester, an amide, a linear carbonate, a cyclic carbonate, etc. may be used.

In an exemplary embodiment of the present disclosure, the ester may be, for example, one or more selected from a group consisting of methyl acetate, ethyl acetate, propyl acetate, methyl propionate, ethyl propionate, propyl propionate, $\gamma$-butyrolactone, $\gamma$-valerolactone, $\gamma$-caprolactone, $\sigma$-valerolactone and $\epsilon$-caprolactone, although not being limited thereto.

In an exemplary embodiment of the present disclosure, the linear carbonate may be, for example, one or more selected from a group consisting of dimethyl carbonate, diethyl carbonate, dipropyl carbonate, ethyl methyl carbonate, methyl propyl carbonate and ethyl propyl carbonate, although not being limited thereto.

In an exemplary embodiment of the present disclosure, the cyclic carbonate may be, for example, one or more selected from a group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and halides thereof. The halides include, for example, fluoroethylene carbonate, etc., although not being limited thereto.

In an exemplary embodiment of the present disclosure, the non-water-based solvent may include an ether-based solvent.

In an exemplary embodiment of the present disclosure, the non-water-based solvent may include the ether-based solvent at a content of 60 vol% or more, e.g., 60-100 vol%, 70-100 vol%, 80-100 vol%, 85-100 vol%, 90-100 vol%, 95-100 vol%, 98-100 vol%, 90-98 vol% or 90-95 vol%, based on total volume of the non-water-based solvent. When the content of the ether-based solvent is within the above ranges based on the total volume of the non-water-based solvent, an advantageous effect may be achieved in terms of the solubility of the components of the electrolyte, such as the lithium salt, etc., although the present disclosure is not limited thereto.

In an exemplary embodiment of the present disclosure, the ether-based solvent may include an acyclic ether, a cyclic ether or a mixture thereof.

In an exemplary embodiment of the present disclosure, the acyclic ether may include, for example, one or more selected from a group consisting of dimethyl ether, diethyl ether, dipropyl ether, dibutyl ether, diisobutyl ether, ethyl methyl ether, ethyl propyl ether, ethyl t-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethylene ether, butylene glycol ether, diethylene glycol ethyl methyl ether, diethylene glycol isopropyl methyl ether, diethylene glycol butyl methyl ether, diethylene glycol t-butyl ethyl ether and ethylene glycol ethyl methyl ether. Specifically, it may include one or more selected from a group consisting of dimethyl ether, dimethoxyethane, diethoxyethane, diethylene glycol dimethyl ether, triethylene glycol dimethyl ether and tetraethylene glycol dimethyl ether, more specifically dimethoxyethane.

In an exemplary embodiment of the present disclosure, the cyclic ether may include, for example, one or more selected from a group consisting of 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene and isosorbide dimethyl ether. Specifically, it may include one or more selected from a group consisting of 2-methylfuran, 1,3-dioxolane, tetrahydrofuran, 2-methyltetrahydrofuran and 2,5-dimethyltetrahydrofuran, more specifically 2-methylfuran.

In an exemplary embodiment of the present disclosure, the non-water-based solvent may include a mixture of an acyclic ether and a cyclic ether.

In an exemplary embodiment of the present disclosure, the non-water-based solvent may include dimethoxyethane (DME) and 2-methylfuran (2-MeF).

In an exemplary embodiment of the present disclosure, the volume ratio of the acyclic ether and the cyclic ether may be 5:95 to 95:5 (v/v), specifically 95:5 to 50:50, more specifically 90:10 to 70:30, 85:15 to 75:25 or 80:20 (v/v). In the present disclosure, the volume ratio corresponds to "the vol% of the acyclic ether": "the vol% of the cyclic ether" in the ether-based solvent.

In an exemplary embodiment of the present disclosure, the non-water-based solvent may not include a carbonate-based solvent in terms of the solubility of the electrolyte. Alternatively, the non-water-based solvent may include a trace amount of the carbonate-based solvent such that the carbonate-based solvent does not affect the solubility of the lithium salt. For example, when the non-water-based solvent includes the carbonate-based solvent, the content of the carbonate-based solvent may be 3 weight% or less, 2 weight% or less, 1 weight% or less, 0.5 weight% or less or 0 weight% (i.e., not included at all) based on the total weight of the electrolyte for a lithium secondary battery.

In an exemplary embodiment of the present disclosure, the lithium salt is not specially limited as long as it is one that can be used as an electrolyte of a lithium secondary battery. The lithium salt may include, for example, one or more of LiCl, LiBr, LiI, LiClO$_4$, LiBF$_4$, LiB$_{10}$Cl$_{10}$, LiPF$_6$, LiCF$_3$SO$_3$, LiCF$_3$CO$_2$, LiC$_4$BO$_8$, LiAsF$_6$, LiSbF$_6$, LiAlCl$_4$, CH$_3$SO$_3$Li, CF$_3$SO$_3$Li, (CF$_3$SO$_2$)$_2$NLi, (C$_2$F$_5$SO$_2$)$_2$NLi, (SO$_2$F)$_2$NLi, (CF$_3$SO$_2$)$_3$CLi, lithium chloroboracite, a lithium lower aliphatic carbonate, lithium tetraphyenylborate and lithium imide.

In an exemplary embodiment of the present disclosure, the content of the lithium salt may be determined appropriately in consideration of ionic conductivity, solubility, etc. For example, the content may be 0.1-4 M, specifically 0.5-2 M. When the content of the lithium salt is within the above ranges, an advantageous effect may be exhibited in terms of ensuring ionic conductivity suitable for driving a battery, or improving the motility of lithium ions and suppressing the decomposition of the lithium salt itself due to adequate viscosity of the electrolyte, although the present disclosure is not limited thereto.

In an exemplary embodiment of the present disclosure, the additive may also include a nitrogen compound in order to improve the electrical conductivity of the electrolyte and the lifetime of the lithium-sulfur battery.

Specifically, the nitrogen compound may, for example, prevent the irreversible consumption of (poly)sulfide by suppressing the reduction of (poly)sulfide occurring during charge/discharge of a lithium-sulfur battery and, thereby, improve the performance of the lithium-sulfur battery, although its effect is not limited thereto.

In an exemplary embodiment of the present disclosure, the nitrogen compound is not specially limited as long as it stably forms a solid-electrolyte interphase (SEI) of the negative electrode and improves charge/discharge efficiency. For example, a nitric acid-based compound, a nitrous acid-based compound or a mixture thereof may be used.

In an exemplary embodiment of the present disclosure, the nitrogen compound may be, for example, selected from a group consisting of an inorganic nitric acid or nitrous acid-based compound such as lithium nitrate ($LiNO_3$), potassium nitrate ($KNO_3$), cesium nitrate ($CsNO_3$), barium nitrate ($Ba(NO_3)_2$), ammonium nitrate ($NH_4NO_3$), lithium nitrite ($LiNO_2$), potassium nitrite ($KNO_2$), cesium nitrite ($CsNO_2$), ammonium nitrite ($NH_4NO_2$), etc.; an organic nitric acid or nitrous acid-based compound such as methyl nitrate, a dialkyl imidazolium nitrate, guanidine nitrate, imidazolium nitrate, pyridinium nitrate, ethyl nitrite, propyl nitrite, butyl nitrite, pentyl nitrite, octyl nitrite, etc.; an organic nitro compound such as nitromethane, nitropropane, nitrobutane, nitrobenzene, dinitrobenzene, nitropyridine, dinitropyridine, nitrotoluene, dinitrotoluene, etc.; and combination thereof, specifically lithium nitrate.

In an exemplary embodiment of the present disclosure, the nitrogen compound may be included at a content of for example, 1-10 weight%, 2-10 weight% or 3-10 weight%, specifically 3-8 weight%, 3-6 weight% or 3-5 weight%, based on the total weight of the electrolyte, although not being limited thereto. When the content of the nitrogen compound is within the above ranges, a more advantageous effect may be exhibited in terms of improving the electrical conductivity of the electrolyte and suppressing the reduction of (poly)sulfide when used in a lithium-sulfur battery, although the present disclosure is not limited thereto.

In order to embody a lithium-sulfur battery with high energy density, the weight ratio of the electrolyte and sulfur (S) in the sulfur-carbon composite of the positive electrode (El/S weight ratio) is 2.5 g/g or lower.

In an exemplary embodiment of the present disclosure, the El/S ratio of the lithium-sulfur battery may be 1.5-2.5 g/g, specifically 2-2.5 g/g, 2-2.3 g/g, 2.0-2.2 g/g or 2.0-2.15 g/g.

In one embodiment of the present invention, the El/S ratio of the lithium-sulfur battery may be calculated by the ratio of the weight of sulfur in the sulfur-carbon composite of the positive electrode and the weight of the electrolyte added in the manufacturing step immediately after manufacturing the lithium-sulfur battery.

In other embodiment of the present invention, the El/S ratio of the lithium-sulfur battery may be calculated by the ratio of the weight of sulfur in the sulfur-carbon composite of the positive electrode and the weight of the electrolyte analyzed by disassembling the lithium-sulfur battery.

As an example, when analyzing the El/S ratio of a lithium-sulfur battery by disassembling the battery, the total weight of the lithium-sulfur battery may be measured in a charged state, then disassembled, and the positive electrode, negative electrode, separator, and case may be washed with a solvent and dried, then calculating the sum of each weight of the positive electrode, negative electrode, separator, and case, and excluding the total weight of the positive electrode, negative electrode, separator, and case from the total weight of the battery. At this time, it may be preferable to use a solvent capable of extracting the electrolyte from the positive electrode, negative electrode, separator, and case as the solvent for cleaning. Next, after separating the positive electrode active material layer and the current collector from the dried positive electrode, the weight of sulfur in the positive electrode may be measured by measuring the weight of sulfur derived from the sulfur-carbon complex present in the positive electrode active material layer. The El/S ratio of the lithium-sulfur battery may be calculated based on the ratio of the weight of sulfur in the sulfur-carbon composite of the positive electrode and the weight of the added electrolyte obtained in this way.

In one embodiment of the present invention, the method of measuring the weight of sulfur derived from the sulfur-carbon complex present in the positive electrode active material layer includes, for example, thermogravimetric analysis (TGA) of the result obtained by scraping the obtained positive electrode active material layer.) may be used to measure the content of sulfur (S) derived from the active material, but the measurement method may not not limited to this.

In one embodiment of the present invention, the state of charge for disassembling the lithium-sulfur battery may be a fully charged state, that is, SOC 100%.

In other embodiment of the present invention, the state of charge for disassembling the lithium-sulfur battery may be SOC 95% to SOC 100%.

In one embodiment of the present invention, disassembly of the charged lithium-sulfur battery may be performed in an inert atmosphere from the viewpoint of safety. For example, deassembling of a lithium-sulfur battery may be performed under an Ar atmosphere.

In an exemplary embodiment of the present disclosure, the lithium-sulfur battery may exhibit an energy density of, for example, 400 Wh/kg or higher. Specifically, the energy density of the lithium-sulfur battery may be 420 Wh/kg or higher, more specifically 430 Wh/kg or higher, like in a range between 400 and 1000 Wh/kg, preferably a range between 410 and 800 Wh/kg, more preferably a range between 420 and 600 Wh/kg, even more preferably a range between 430 and 550 Wh/kg.

In an exemplary embodiment of the present disclosure, the energy density of the lithium-sulfur battery may be measured by a known method without special limitation. For example, the energy density of the lithium-sulfur battery may be calculated according to the following equations after evaluating discharge capacity by discharging at 0.1 C after discharging and charging at least once in a range of 1.8-2.7 V at room temperature.

In one embodiment of the present invention, the initial discharging and charging may be performed at a rate of 0.1 C to 0.3 C, respectively. Specifically, the initial discharging and charging may be performed at a rate of 0.1 C to 0.2 C, for example, 0.1 C.

Additionally, in one embodiment of the present invention, the initial discharging and charging may be repeated three times at a rate of 0.1 C, respectively.

In the following equation, the discharge capacity, the driving voltage and the cell weight may be measured in mAh, V and kg units, respectively, and the energy density may be calculated by the following equation.

Energy density (Wh/kg) = {[(discharge capacity (mAh) x driving voltage (V))/1000]/(cell weight (kg))}          [Equation]

**In** an exemplary embodiment of the present disclosure, the room temperature may be, for example, 23-25 °C, specifically 23 °C.

**In** an exemplary embodiment of the present disclosure, the charge/discharge rate may be 0.1-0.5 C-rate, for example, 0.3 C-rate, although not being specially limited thereto.

In an exemplary embodiment of the present disclosure, the lithium-sulfur battery may have various shapes. For example, it may be a pouch-type battery or a cylindrical battery, although not being limited thereto.

In another aspect, the present disclosure provides a method for evaluating the energy density of a lithium-sulfur battery based on diffraction angles in the XRD pattern of the lithium-sulfur battery.

In one embodiment of the present disclosure a method for evaluating the energy density of a lithium-sulfur battery comprising: an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode, is provided.

The method comprises the following steps:

discharging the lithium-sulfur battery, preferably at room temperature, to a state of discharge (DOD) from 15% to 80%, determining a lithium-sulfur battery containing a compound comprising three or more characteristic diffraction angle peaks (2θ values) selected from the following: 7.1 ± 0.2°, 9.4 ± 0.2°, 9.6 ± 0.2°, 9.9 ± 0.2°, 10.0 ± 0.2°, 10.4 ± 0.2°, 11.0 ± 0.2°, 11.6 ± 0.2°, 12.1 ± 0.2°, 13.3 ± 0.2°, 14.5 ± 0.2° and 15.0 ± 0.2° in the X-ray diffraction (XRD) pattern, preferably at DOD 15% to DOD 80%. Preferably, determining a lithium-sulfur battery of the present invention as defined above.

In one embodiment of the present invention, the XRD pattern may be obtained from real-time charge/discharge XRD measurement results for a lithium-sulfur battery.

In one embodiment of the present disclosure, the evaluation method involves charging the lithium-sulfur battery to a fully charged state (SOC 100%) at 0.1 C to 0.3 C, for example, 0.2 C, and then obtaining XRD results in real time while discharging at 0.05 C to 0.2 C, for example, 0.1 C.

In an exemplary embodiment of the present disclosure, the DOD 15% to DOD 80% is a state having a potential of 1.7-2.2 V.

In an exemplary embodiment of the present disclosure, the DOD 15% to DOD 80% is a state having a discharge capacity per sulfur (S) weight of 150-960 mAh/g(S).

In an exemplary embodiment of the present disclosure, the battery having high energy density may be, for example, a battery having an energy density of 300 Wh/kg or higher, specifically 430 Wh/kg or higher, like in a range between 400 and 1000 Wh/kg, preferably a range between 410 and 800 Wh/kg, more preferably a range between 420 and 600 Wh/kg, even more preferably a range between 430 and 550 Wh/kg.

<u>MODE FOR DISCLOSURE</u>

Hereinafter, specific examples are presented to help understanding the present disclosure. However, the following examples merely illustrate the present disclosure and it is obvious to those skilled in the art that various changes and modifications can be made within the scope of the appended claims.

**[Preparation of lithium-sulfur batteries]**

**Example 1**

A sulfur-carbon composite was prepared by mixing inorganic sulfur ($S_8$) and carbon nanotube (CNT) (S/C weight ratio = 2.33) as a positive electrode active material. A positive electrode slurry composition was prepared by mixing 96 weight% of the prepared sulfur-carbon composite with 4 weight% of PAA (polyacrylate) as a binder. After coating the positive electrode slurry composition on an aluminum current collector, a positive electrode was prepared by drying the same. The sulfur (S) loading amount of the positive electrode was 3.7 mAh/cm$^2$.

Lithium metal with a thickness of 60 μm was used as a negative electrode.

An electrode assembly was prepared by placing the positive electrode and the negative electrode to face each other and interposing a polyethylene separator with a thickness of 12 μm and a porosity of 46 vol% therebetween.

After housing the prepared electrode assembly in a pouch-type case, a lithium-sulfur battery was prepared by injecting an electrolyte wherein 0.75 M of a lithium salt (LiTFSI) and 3 wt% of lithium nitrate ($LiNO_3$) were dissolved in a 8:2 (v/v) mixture solvent of dimethoxyethane (DME) and 2-methylfuran (2-MeF) to an El/S ratio of 2.15 g/g.

**Comparative Example 1**

A lithium-sulfur battery was prepared in the same manner as in Example 1 except that the sulfur (S) loading amount of the positive electrode was 2.7 mAh/cm$^2$ and the El/S ratio was 2.9 g/g.

**Comparative Example 2**

A lithium-sulfur battery was prepared in the same manner as in Example 1 except that the sulfur (S) loading amount of the positive electrode was 3.5 mAh/cm$^2$ and the El/S ratio was 2.60 g/g.

**Comparative Example 3**

A lithium-sulfur battery was prepared in the same manner as in Example 1 except that the sulfur (S) loading amount of the positive electrode was 3.5 mAh/cm$^2$ and the El/S ratio was 3.00 g/g.

**[Evaluation of battery performance]**

After repeating 3 times of discharging and charging of the lithium-sulfur battery prepared in Example 1 and Comparative Examples 1-3 at room temperature (23 °C) at 0.1 C within a range of 1.8-2.7 V, and then conducting discharging at 0.1C, the specific capacity of the battery was measured and the energy density (Wh/kg) of the battery was evaluated therefrom..

The S/ El may reflect the concentration of sulfur in gram in the electrolyte solution in gram, and may be the reciprocal value of S/El as indicated above. Thus, S/El may be equivalent to 1/(El/S).

The sulfur (S) loading amount of the positive electrode per ratio of electrolyte and sulfur has been calculated according to equation 1:

[equation 1]

$$S_X = S_{PE} / S_{EL/S},$$

wherein $S_{PE}$ is the sulfur (S) loading amount of the positive electrode as a mAh/cm$^2$ value, $S_{EL/S}$ is the weight ratio of the electrolyte and sulfur (S) as a dimensionless value, and wherein

$S_X$ is the sulfur (S) loading amount of the positive electrode per ratio of electrolyte a sulfur.

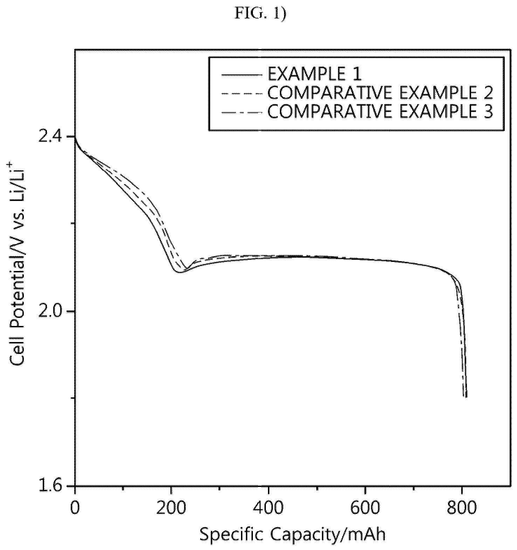

FIG. 1 shows the result of evaluating the capacity of the batteries of Example 1, Comparative Example 2 and Comparative Example 3. The energy density of the batteries of Example 1 and Comparative Examples 1-3 calculated therefrom is shown in Table 1.

Energy density (Wh/kg) = {[(discharge capacity (mAh) x driving voltage (V))/1000]/(cell weight (kg))}       [Equation]

[Table 1]

| | Positive electrode loading amount (mAh/cm$^2$) | El/S ratio (g/g) | S/ El ratio (g/g) | $S_X$ | Energy density (Wh/kg) |
|---|---|---|---|---|---|
| Example 1 | 3.7 | 2.15 | 0.47 | 1.72 | 440 |
| Comparative Example 1 | 2.7 | 2.9 | 0.38 | 1.35 | 350 |
| Comparative Example 2 | 3.5 | 2.60 | 0.33 | 1.17 | 420 |
| Comparative Example 3 | 3.5 | 3.00 | 0.34 | 0.93 | 400 |

**[Evaluation of XRD patterns of batteries]**

The XRD patterns of the lithium-sulfur batteries prepared in Example 1 and Comparative Examples 1-3 were obtained through operando X-ray diffraction (XRD) analysis.

First, the lithium sulfur battery of the Example 1 and Comparative Example 1 was activated by discharging at 0.1C at room temperature (23 °C) to 1.8 V, then charged at 0.2 C to 2.7 V and the real-time charge/discharge XRD pattern of each battery was obtained by discharging at 0.1 C-rate within a range of 2.7-1.8 V.

Next, the lithium sulfur battery of the Comparative Example 2 and Comparative Example 3 was activated by discharging at 0.1 C at room temperature (23 °C) to 1.8 V, then charged at 0.1 C to 2.7 V and the real-time charge/discharge XRD pattern of each battery was obtained by discharging at 0.1 C-rate within a range of 2.7-1.8 V.

Specifically, the real time charge/discharge XRD pattern was measured using Mo K-alpha X-ray ($\lambda$ = 0.709 Å) of PANalyical Empyrean XRD with 2 theta ($2\theta$) values of 7-17 in a transmission mode. Each pattern was measured at 0.014° intervals for a total of 3 minutes. The XRD measurement was performed using a pressing jig equipped with a Be window.

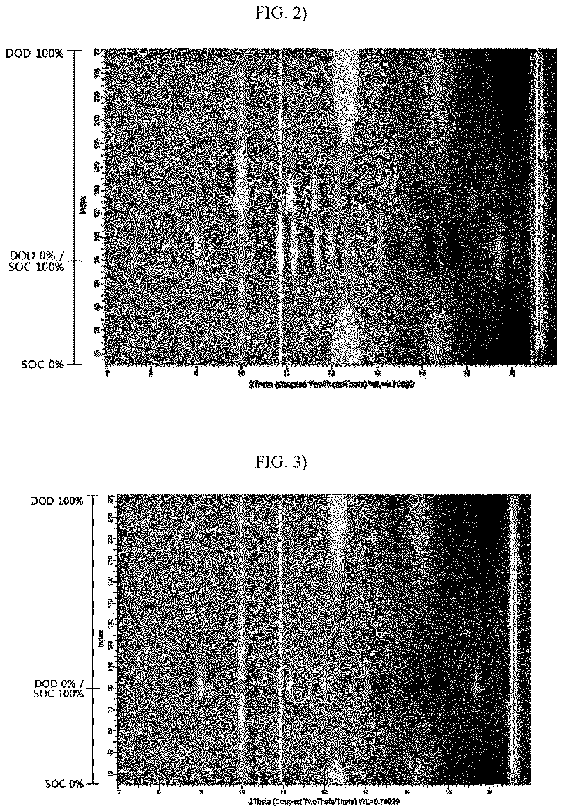

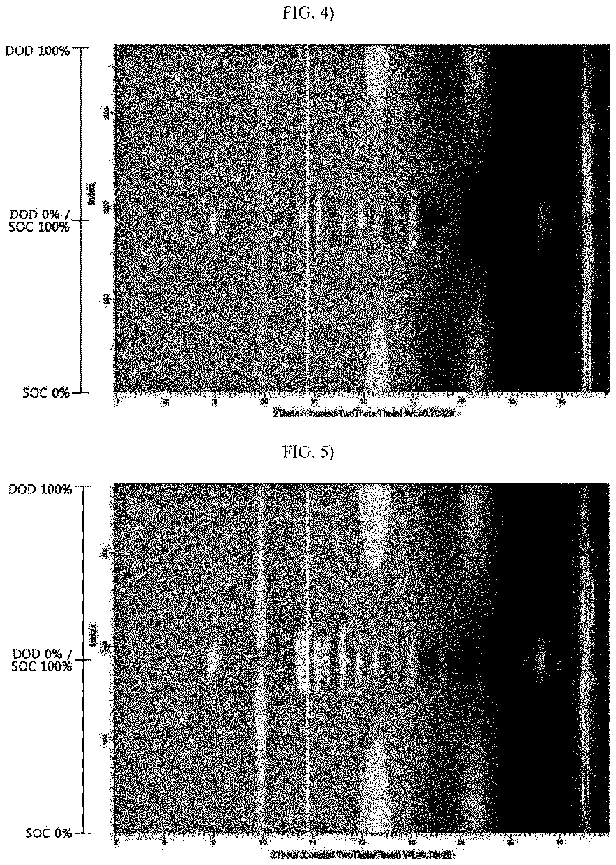

The obtained real time charge/discharge XRD pattern images are shown in FIG. 2 (Example 1, having an energy density of 440 Wh/ kg) and FIG. 3 (Comparative Example 1, having an energy density of 350 Wh/ kg). In Example 1 the lithium-sulfur battery has been charged with 0.2 C charge rate and discharged with a 0.1 C discharge rate. The lithium-sulfur battery was charged until an index of 100, and subsequently discharged starting at an index of 100 until an index of 270. FIG. 4 (Comparative Example 2) and FIG. 5 (Comparative Example 3) show the XRD pattern images of additional comparative examples.

Referring to FIGS. 2-5, the diffraction angles of the characteristic peaks confirmed in Example 1 are as follows.

Figure 2, example 1 at Index 90 (SOC 100, i.e. fully charge, DOD 0): 8.5, 9.0, 10.7, 10.9, 11.2, 11.4, 11.6, 12.0, 12.3, 13.1, 15.7 ± 0.2 $2\vartheta$;

Figure 2, example 1 at Index 130 (DOD 15) 7.1, 9.0, 9.4, 9.6, 9.9, 10.0, 10.4, 11.0, 11.6, 12.1, 13.3, 14.5 and 15.0 ± 0.2 $2\vartheta$. The peaks can be seen until to index 175 (equivalent to DOD 60) (Figure 2B). The peaks demonstrate the formation of a new compound, which may be crystalline, and which can be measured by XRD. At the index of 130 to 175 the peaks at 7.1, 9.9, 10.0, 11.0, 11.6, 12.1 ± 0.2° $2\vartheta$ may have a characteristic intensity, as can be gathered from the heat map and may be especially characteristic for the formation of a compound, preferably crystalline.

Figure 3, comparative example 1 at Index 90 (SOC 100, i.e. fully charge, DOD 0): 8.5, 9.0, 10.7, 11.2, 11.6, 12.0, 12.3, 12.7, 13.1, 15.7 $2\vartheta$. The XRD of comparative example 1 does not show the formation of a new compound at DOD 15 to 60 (Figure 3B).

Figure 4, comparative example 2 at Index 185 (SOC 100, i.e. fully charge, DOD 0): 8.5, 9.0, 9.2, 10.7, 10.9, 11.2, 11.4, 11.6, 12.0, 12.3, 12.7, 13.1 $2\vartheta$. The XRD of comparative example 1 does not show the formation of a new compound at DOD 15 to 60 (Figure 4B).

Figure 5, comparative example 3 at Index 185 (SOC 100, i.e. fully charge, DOD 0): 8.5, 9.0, 9.2, 10.7, 11.2, 11.4, 11.6, 12.0, 12.3, 12.7, 13,1, 15.7 $2\vartheta$. The XRD of comparative example 1 does not show the formation of a new compound at DOD 15 to 60 (Figure 5B).

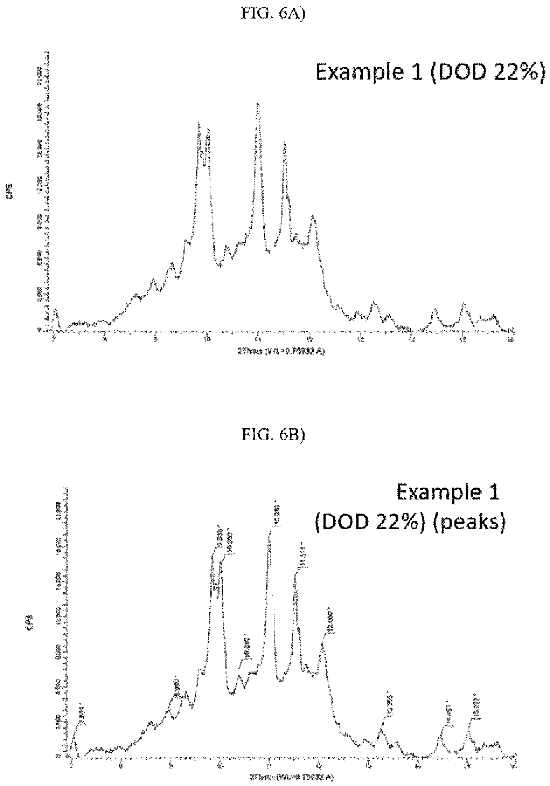

FIG. 6A shows the XRD pattern of example 1, wherein the X-axis discloses the diffraction angle ($2\vartheta$, at wavelength ($\lambda$) = 0.70932 Å), similar to figure 2, and the Y-axis shows the intensity (in counts per second (CPS)) of each peak, similar to the heat map in figure 2, at DOD 22% of the lithium-sulfur battery.

FIG. 6B shows the same XRD pattern of example 1 as in FIG. 6A, wherein some peaks have been labelled, at DOD 22% of the lithium-sulfur battery, namely 7.034, 8.960, 9.838, 10.033, 10.382, 10.989, 11.511, 12.060, 13.265, 14.461, and 15.022 $2\vartheta$. The peaks which are most characteristic may be 7.1, 9.9, 10.0, 10.4, 11.0, 11.6, and 12.1, additionally 9.4, 9.6, 13.3, 14.5 and 15.0 ± 0.2° $2\vartheta$ may be seen, too.

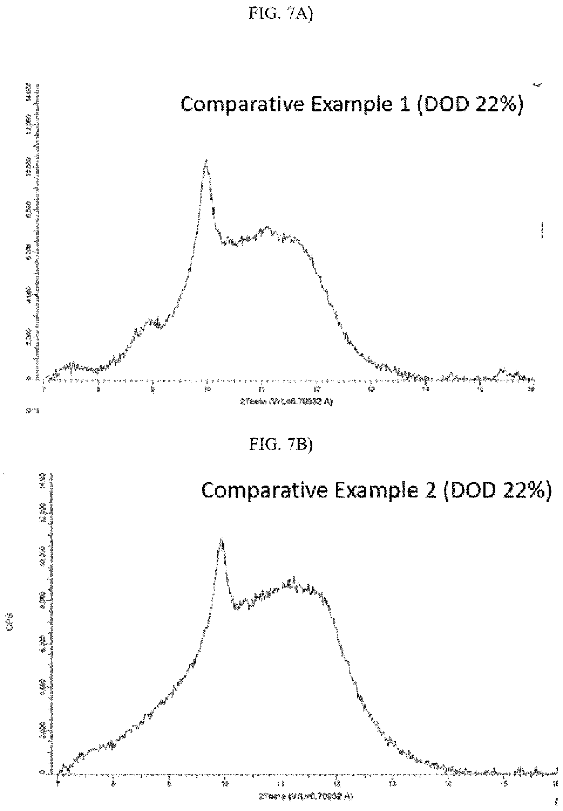

FIG. 7A shows the XRD pattern of comparative example 1, wherein the X-axis discloses the diffraction angle ($2\vartheta$,

at wavelength ($\lambda$) = 0.70932 Å), similar to figure 2, and the Y-axis shows the intensity (in counts per second (CPS)) of each peak, similar to the heat map in figure 2, at DOD 22% of the lithium-sulfur battery. As can be seen, only one peak with an intensity above 8000 CPS can be seen a 10.0 $2\vartheta$. So that comparative example 2 does not show the same compound as example 1 at DOD 22%.

FIG. 7B shows the XRD pattern of comparative example 2, wherein the X-axis discloses the diffraction angle ($2\vartheta$, at wavelength ($\lambda$) = 0.70932 Å), similar to figure 2, and the Y-axis shows the intensity (in counts per second (CPS)) of each peak, similar to the heat map in figure 2, at DOD 22% of the lithium-sulfur battery. As can be seen, only one peak with an intensity above 8000 CPS can be seen a 10.0 $2\vartheta$. So that comparative example 2 does not show the same compound as example 2 at DOD 22%.

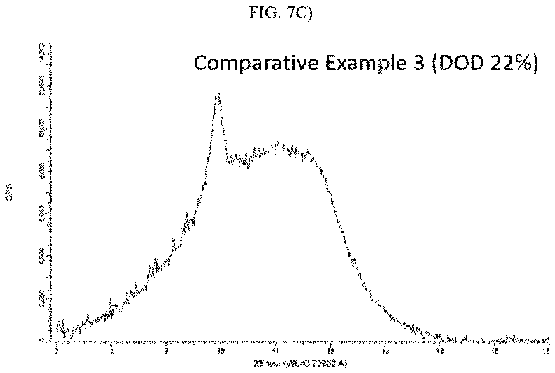

FIG. 7C shows the XRD pattern of comparative example 3, wherein the X-axis discloses the diffraction angle ($2\vartheta$, at wavelength ($\lambda$) = 0.70932 Å), similar to figure 2, and the Y-axis shows the intensity (in counts per second (CPS)) of each peak, similar to the heat map in figure 2, at DOD 22% of the lithium-sulfur battery. As can be seen, only one peak with an intensity above 8000 CPS can be seen a 10.0 $2\vartheta$. So that comparative example 2 does not show the same compound as example 3 at DOD 22%.

Referring to the right image of FIG. 3 (Comparative Example 1) and FIG. 4 and FIG. 5, less than three characteristic peaks were observed in the region where the characteristic peaks of Example 1 were observed.

Whereas there was no significant difference in the discharge profiles of Example 1, Comparative Example 2 and Comparative Example 3 (FIG. 1) with similar level of positive electrode loading, the characteristic crystalline form was observed only in the XRD pattern of Example 1. Example 1 showed a much higher energy density as 440 Wh/kg as compared to Comparative Example 1, Comparative Example 2 and Comparative Example 3.

According to Figure 1, which compares the discharge profiles of Example 1, Comparative Example 2, and Comparative Example 3, no significant difference in discharge capacity profiles was confirmed between them, but in the XRD patterns shown in Figures 2 to 7C, only Example 1 showed a specific crystalline product. At this time, when comparing the energy density of the batteries through Table 1 above, it was confirmed that there was a significant difference between them (Example 1: 440 Wh/kg, Comparative Examples 2: 420 Wh/kg, and Comparative Examples 3: 400 Wh/kg, respectively) despite having a similar level of discharge capacity profiles.

That is, as in the equation for calculating the energy density, the weight of the batteries and the driving voltage are considered together for the energy density, and it was confirmed that it is inappropriate to estimate the energy density based on the discharge capacity alone.

Furthermore, in order to implement a lithium-sulfur battery having a property of the high energy density, it must have the characteristic of maintaining high reactivity despite solid-state reactions occurring within the battery. The characteristic peak of XRD pattern was detected only in Example 1, where the Sx value according to Equation 1 was 1.4 mAh/cm$^2$ or more, and it was confirmed that the battery according to Example 1 could exhibit high energy density by maintaining high reactivity even though a solid-phase reaction occurred within the battery.

**Claims**

1.    A lithium-sulfur battery comprising:
      an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode,

      wherein the lithium-sulfur battery fulfills the following requirement of equation 1:

$$[\text{equation 1}]$$

$$S_X = S_{PE} / S_{EL/S},$$

      wherein $S_{PE}$ is the sulfur (S) loading amount of the positive electrode as a mAh/cm$^2$ value,
      $S_{EL/S}$ is the weight ratio of the electrolyte and sulfur (S) as a dimensionless value, and wherein $S_X$ is the sulfur (S) loading amount of the positive electrode per ratio of electrolyte and sulfur, and $S_X$ is 1.4 mAh/cm$^2$ or higher, preferably in a range between 1.4 and 10 mAh/ cm$^2$; and
      wherein a weight ratio of the electrolyte and sulfur (S) in the sulfur-carbon composite (El/S weight ratio) is 2.5 or less.

2.    A lithium-sulfur battery according to claim 1, wherein the lithium-sulfur battery contains a compound comprising the following characteristic diffraction angle peaks (2θ values): 7.1 ± 0.2°, 9.9 ± 0.2°, 10.0 ± 0.2°, 10.4 ± 0.2°, 11.0 ± 0.2°, 11.6 ± 0.2°, and 12.1 ± 0.2° in the X-ray diffraction (XRD) pattern at DOD 15% to DOD 80% measured as set forth in the description.

3.  A lithium-sulfur battery comprising:

    an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode,, wherein the lithium-sulfur battery contains a compound comprising three or more characteristic diffraction angle peaks (2θ values) selected from the following: 7.1 ± 0.2°, 9.0 ± 0.2°, 9.4 ± 0.2°, 9.6 ± 0.2°, 9.9 ± 0.2°, 10.0 ± 0.2°, 10.4 ± 0.2°, 11.0 ± 0.2°, 11.6 ± 0.2°, 12.1 ± 0.2°, 13.3 ± 0.2°, 14.5 ± 0.2° and 15.0 ± 0.2° in the X-ray diffraction (XRD) pattern at DOD 15% to DOD 80% measured as set forth in the description; and
    wherein a weight ratio of the electrolyte and sulfur (S) in the sulfur-carbon composite (El/S weight ratio) is 2.5 or less.

4.  A lithium-sulfur battery according to claim 3, wherein the lithium-sulfur battery contains a compound comprising the following characteristic diffraction angle peaks (2θ values): 7.1 ± 0.2°, 9.9 ± 0.2°, 10.0 ± 0.2°, 10.4 ± 0.2°, 11.0 ± 0.2°, 11.6 ± 0.2°, and 12.1 ± 0.2° in the X-ray diffraction (XRD) pattern at DOD 15% to DOD 80% measured as set forth in the description.

5.  The lithium-sulfur battery according to claims 3 or 4, wherein the lithium-sulfur battery contains a compound comprising the following characteristic diffraction angle peaks (2θ values): 7.1 ± 0.2°, 9.0 ± 0.2°, 9.4 ± 0.2°, 9.6 ± 0.2°, 9.9 ± 0.2°, 10.0 ± 0.2°, 10.4 ± 0.2°, 11.0 ± 0.2°, 11.6 ± 0.2°, 12.1 ± 0.2°, 13.3 ± 0.2°, 14.5 ± 0.2° and 15.0 ± 0.2° in the X-ray diffraction (XRD) pattern at **DOD** 15% to **DOD** 80% measured as set forth in the description.

6.  The lithium-sulfur battery according to one of the preceding claims 2 to 5, wherein the **DOD** 15% to **DOD** 80% is a state having a potential of 1.7-2.2 V, and/or wherein the **DOD** 15% to **DOD** 80% is a state having a discharge capacity per sulfur (S) weight of 150-960 mAh/g.

7.  The lithium-sulfur battery according to one of the preceding claims, wherein the sulfur-carbon composite has a sulfur/carbon (S/C) weight ratio of 2.3 or higher, and / or
    wherein the weight of the sulfur-carbon composite is 90 wt.% or more based on the total weight of the positive electrode.

8.  The lithium-sulfur battery according to one of the preceding claims, wherein the positive electrode has a sulfur (S) loading amount of 3.6 mAh/cm$^2$ or more.

9.  The lithium-sulfur battery according to one of the preceding claims, wherein the negative electrode has a thickness of 40-80 μm.

10. The lithium-sulfur battery according to one of the preceding claims, wherein the positive electrode has a sulfur (S) loading amount of 3.6 -5.0 mAh/cm$^2$ or more.

11. The lithium-sulfur battery according to one of the preceding claims, wherein the lithium-sulfur battery has an energy density of 430 Wh/kg or higher.

12. The lithium-sulfur battery according to one of the preceding claims, wherein the lithium-sulfur battery is a pouch-type battery or a cylindrical battery.

13. A method for evaluating the energy density of a lithium-sulfur battery comprising: an electrode assembly, an electrolyte, and a case accommodating the electrode assembly, wherein the electrode assembly comprises a positive electrode comprising a sulfur-carbon composite, a negative electrode and a separator disposed between the positive electrode and the negative electrode;
    wherein the method comprises the following steps:
    discharging the lithium-sulfur battery at room temperature to a state of discharge (DOD) from 15% to 80%,

    determining a lithium-sulfur battery containing a compound comprising three or more characteristic diffraction angle peaks (2θ values) selected from the following: 7.1 ± 0.2°, 9.4 ± 0.2°, 9.6 ± 0.2°, 9.9 ± 0.2°, 10.0 ± 0.2°, 10.4 ± 0.2°, 11.0 ± 0.2°, 11.6 ± 0.2°, 12.1 ± 0.2, 13.3 ± 0.2°, 14.5 ± 0.2° and 15.0 ± 0.2° in the X-ray diffraction (XRD) pattern, preferably at DOD 15% to DOD 80% measured as set forth in the description and wherein a weight ratio of the electrolyte and sulfur (S) in the sulfur-carbon composite (El/S weight ratio) is 2.5 or less.

14. The method according to claim 13, wherein the DOD 15% to DOD 80% is a state having a potential of 1.7-2.2 V, and/ or

wherein the DOD 15% to DOD 80% is a state having a discharge capacity per sulfur (S) weight of 150-960 mAh/g(S), and / or
wherein the battery is a battery having an energy density of 430 Wh/kg or higher.

## Patentansprüche

1. Lithium-Schwefel-Batterie, umfassend:
eine Elektrodenanordnung, einen Elektrolyten und ein Gehäuse, das die Elektrodenanordnung aufnimmt, wobei die Elektrodenanordnung eine positive Elektrode, die einen Schwefel-Kohlenstoff-Verbundstoff umfasst, eine negative Elektrode und einen Separator, der zwischen der positiven Elektrode und der negativen Elektrode angeordnet ist, umfasst,

wobei die Lithium-Schwefel-Batterie die folgende Anforderung von Gleichung 1 erfüllt:

$$[\text{Gleichung 1}]$$

$$S_X = S_{PE} / S_{EL/S},$$

wobei SPE die Schwefel(S)-Beladungsmenge der positiven Elektrode als ein mAh/cm$^2$ -Wert ist,
$S_{EL/S}$ das Gewichtsverhältnis des Elektrolyten und Schwefel (S) als ein dimensionsloser Wert ist und

wobei $S_X$ die Schwefel(S)-Beladungsmenge der positiven Elektrode pro Verhältnis von Elektrolyt und Schwefel ist und SX 1,4 mAh/cm$^2$ oder höher, vorzugsweise in einem Bereich zwischen 1,4 und 10 mAh/cm$^2$ , ist; und
wobei ein Gewichtsverhältnis des Elektrolyten und Schwefel (S) in dem Schwefel-Kohlenstoff- Verbundstoff (EL/S-Gewichtsverhältnis) 2,5 oder weniger beträgt.

2. Lithium-Schwefel-Batterie nach Anspruch 1, wobei die Lithium-Schwefel-Batterie eine Verbindung enthält, die die folgenden charakteristischen Beugungswinkelspitzen (20-Werte) umfasst: 7,1 ± 0,2°, 9,9 ± 0,2°, 10,0 ± 0,2°, 10,4 ± 0,2°, 11,0 ± 0,2°, 11,6 ± 0,2° und 12,1 ± 0,2° in dem Röntgenbeugungsmuster (XRD-Muster) bei DOD 15 % bis DOD 80 %, gemessen wie in der Beschreibung dargelegt.

3. Lithium-Schwefel-Batterie, umfassend:

eine Elektrodenanordnung, einen Elektrolyten und ein Gehäuse, das die Elektrodenanordnung aufnimmt, wobei die Elektrodenanordnung eine positive Elektrode, die einen Schwefel-Kohlenstoff-Verbundstoff umfasst, eine negative Elektrode und einen Separator, der zwischen der positiven Elektrode und der negativen Elektrode angeordnet ist, umfasst, wobei die Lithium-Schwefel-Batterie eine Verbindung enthält, die drei oder mehr charakteristische Beugungswinkelspitzen (20-Werte) umfasst, die aus den folgenden ausgewählt sind: 7,1 ± 0,2°, 9,0 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2°, 13,3 ± 0,2°, 14,5 ± 0,2° und 15,0 ± 0,2° in dem Röntgenbeugungsmuster (XRD-Muster) bei DOD 15 % bis DOD 80 %, gemessen wie in der Beschreibung dargelegt; und
wobei ein Gewichtsverhältnis des Elektrolyten und Schwefel (S) in dem Schwefel-Kohlenstoff- Verbundstoff (EL/S-Gewichtsverhältnis) 2,5 oder weniger beträgt.

4. Lithium-Schwefel-Batterie nach Anspruch 3, wobei die Lithium-Schwefel-Batterie eine Verbindung enthält, die die folgenden charakteristischen Beugungswinkelspitzen (20-Werte) umfasst: 7,1 ± 0,2°, 9,9 ± 0,2°, 10,0 ± 0,2°, 10,4 ± 0,2°, 11,0 ± 0,2°, 11,6 ± 0,2° und 12,1 ± 0,2° in dem Röntgenbeugungsmuster (XRD-Muster) bei DOD 15 % bis DOD 80 %, gemessen wie in der Beschreibung dargelegt.

5. Lithium-Schwefel-Batterie nach Anspruch 3 oder 4, wobei die Lithium-Schwefel-Batterie eine Verbindung enthält, die die folgenden charakteristischen Beugungswinkelspitzen (20-Werte) umfasst: 7,1 ± 0,2°, 9,0 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2°, 13,3 ± 0,2°, 14,5 ± 0,2° und 15,0 ± 0,2° in dem Röntgenbeugungsmuster (XRD-Muster) bei DOD 15 % bis DOD 80 %, gemessen wie in der Beschreibung dargelegt.

6. Lithium-Schwefel-Batterie nach einem der vorhergehenden Ansprüche 2 bis 5, wobei die **DOD** 15 % bis DOD 80 % ein Zustand mit einem Potential von 1,7-2,2 V ist, und/oder
   wobei die DOD 15 % bis DOD 80 % ein Zustand mit einer Entladungskapazität pro Schwefel(S)-Gewicht von 150-960 mAh/g ist.

7. Lithium-Schwefel-Batterie nach einem der vorhergehenden Ansprüche, wobei der Schwefel-Kohlenstoff-Verbundstoff ein Schwefel/Kohlenstoff(S/C)-Gewichtsverhältnis von 2,3 oder höher aufweist, und/oder
   wobei das Gewicht des Schwefel-Kohlenstoff-Verbundstoffs 90 Gew.-% oder mehr, bezogen auf das Gesamtgewicht der positiven Elektrode, beträgt.

8. Lithium-Schwefel-Batterie nach einem der vorhergehenden Ansprüche, wobei die positive Elektrode eine Schwefel(S)-Beladungsmenge von 3,6 mAh/cm$^2$ oder mehr aufweist.

9. Lithium-Schwefel-Batterie nach einem der vorhergehenden Ansprüche, wobei die negative Elektrode eine Dicke von 40-80 $\mu$m aufweist.

10. Lithium-Schwefel-Batterie nach einem der vorhergehenden Ansprüche, wobei die positive Elektrode eine Schwefel(S)-Beladungsmenge von 3,6-5,0 mAh/cm$^2$ oder mehr aufweist.

11. Lithium-Schwefel-Batterie nach einem der vorhergehenden Ansprüche, wobei die Lithium-Schwefel-Batterie eine Energiedichte von 430 Wh/kg oder höher aufweist.

12. Lithium-Schwefel-Batterie nach einem der vorhergehenden Ansprüche, wobei die Lithium-Schwefel-Batterie eine beutelartige Batterie oder eine zylindrische Batterie ist.

13. Verfahren zum Bewerten der Energiedichte einer Lithium-Schwefel-Batterie, umfassend: eine Elektrodenanordnung, einen Elektrolyten und ein Gehäuse, das die Elektrodenanordnung aufnimmt, wobei die Elektrodenanordnung eine positive Elektrode, die einen Schwefel-Kohlenstoff-Verbundstoff umfasst, eine negative Elektrode und einen Separator, der zwischen der positiven Elektrode und der negativen Elektrode angeordnet ist, umfasst;
    wobei das Verfahren die folgenden Schritte umfasst:
    Entladen der Lithium-Schwefel-Batterie bei Raumtemperatur auf einen Entladungszustand (DOD) von 15 % bis 80 %,

    Bestimmen einer Lithium-Schwefel-Batterie, die eine Verbindung enthält, die drei oder mehr charakteristische Beugungswinkelspitzen (20-Werte) umfasst, die aus den folgenden ausgewählt sind: 7,1 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2°, 13,3 ± 0,2°, 14,5 ± 0,2° und 15,0 ± 0,2° in dem Röntgenbeugungsmuster (XRD-Muster), vorzugsweise bei DOD 15 % bis DOD 80 %, gemessen wie in der Beschreibung dargelegt, und
    wobei ein Gewichtsverhältnis des Elektrolyten und Schwefel (S) in dem Schwefel-Kohlenstoff- Verbundstoff (EL/S-Gewichtsverhältnis) 2,5 oder weniger beträgt.

14. Verfahren nach Anspruch 13, wobei die DOD 15 % bis DOD 80 % ein Zustand mit einem Potential von 1,7-2,2 V ist, und/oder

    wobei die DOD 15 % bis DOD 80 % ein Zustand mit einer Entladungskapazität pro Schwefel(S)-Gewicht von 150-960 mAh/g(S) ist, und/oder
    wobei die Batterie eine Batterie mit einer Energiedichte von 430 Wh/kg oder höher ist.

**Revendications**

1. Batterie au lithium-soufre comprenant :

un ensemble électrode, un électrolyte et un boîtier recevant l'ensemble électrode, dans laquelle l'ensemble électrode comprend une électrode positive comprenant un composite de soufre-carbone, une électrode négative et un séparateur disposé entre l'électrode positive et l'électrode négative,

dans laquelle la batterie au lithium-soufre satisfait à l'exigence suivante de l'équation 1 :

[équation 1]

$$S_X = S_{PE} / S_{EL/S,}$$

dans laquelle $S_{PE}$ est la quantité de charge de soufre (S) de l'électrode positive qui est une valeur mAh/cm$^2$, $S_{EL/S}$ est le rapport en poids de l'électrolyte et du soufre (S) qui est une valeur sans dimensions, et dans laquelle $S_X$ est la quantité de charge de soufre (S) de l'électrode positive dans le rapport de l'électrolyte et du soufre, et $S_X$ est 1,4 mAh/cm$^2$ ou plus, de préférence dans une plage entre 1,4 et 10 mAh/cm$^2$ ; et dans laquelle un rapport en poids de l'électrolyte et du soufre (S) dans le composite de soufre-carbone (rapport en poids El/S) est 2,5 ou moins.

2. Batterie au lithium-soufre selon la revendication 1, dans laquelle la batterie au lithium-soufre contient un composé comprenant les pics d'angle de diffraction caractéristiques (valeurs de 2θ) suivants : 7,1 ± 0,2°, 9,9 ± 0,2°, 10,0 ± 0,2°, 10,4 ± 0,2°, 11,0 ± 0,2°, 11,6 ± 0,2° et 12,1 ± 0,2° dans le motif de diffraction des rayons X (XRD) de DOD 15 % à DOD 80 %, mesurés comme décrit dans la description.

3. Batterie au lithium-soufre comprenant :

un ensemble électrode, un électrolyte et un boîtier recevant l'ensemble électrode, dans laquelle l'ensemble électrode comprend une électrode positive comprenant un composite de soufre-carbone, une électrode négative et un séparateur disposé entre l'électrode positive et l'électrode négative, dans laquelle la batterie au lithium-soufre contient un composé comprenant trois ou plus pics d'angle de diffraction caractéristiques (valeurs de 2θ) sélectionnés parmi les suivants : 7,1 ± 0,2°, 9,0 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2°, 13,3 ± 0,2°, 14,5 ± 0,2° et 15,0 ± 0,2° dans le motif de diffraction des rayons X (XRD) de DOD 15 % à DOD 80 %, mesurés comme décrit dans la description ; et dans laquelle un rapport en poids de l'électrolyte et du soufre (S) dans le composite de soufre-carbone (rapport en poids El/S) est 2,5 ou moins.

4. Batterie au lithium-soufre selon la revendication 3, dans laquelle la batterie au lithium-soufre contient un composé comprenant les pics d'angle de diffraction caractéristiques (valeurs de 2θ) suivants : 7,1 ± 0,2°, 9,9 ± 0,2°, 10,0 ± 0,2°, 10,4 ± 0,2°, 11,0 ± 0,2°, 11,6 ± 0,2° et 12,1 ± 0,2° dans le motif de diffraction des rayons X (XRD) de DOD 15 % à DOD 80 %, mesurés comme décrit dans la description.

5. Batterie au lithium-soufre selon la revendication 3 ou 4, dans laquelle la batterie au lithium-soufre contient un composé comprenant les pics d'angle de diffraction caractéristiques (valeurs de 2θ) suivants : 7,1 ± 0,2°, 9,0 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2°, 13,3 ± 0,2°, 14,5 ± 0,2° et 15,0 ± 0,2° dans le motif de diffraction des rayons X (XRD) de DOD 15 % à DOD 80 % mesurés comme décrit dans la description.

6. Batterie au lithium-soufre selon l'une quelconque des revendications précédentes 2 à 5, dans laquelle le DOD 15 % au DOD 80 % est un état ayant un potentiel de 1,7-2,2 V, et/ou dans laquelle le DOD 15 % au DOD 80 % est un état ayant une capacité de décharge par poids de soufre (S) de 150-960 mAh/g.

7. Batterie au lithium-soufre selon l'une quelconque des revendications précédentes, dans laquelle le composite de soufre-carbone a un rapport en poids de soufre/carbone (S/C) de 2,3 ou plus, et/ou dans laquelle le poids du composite de soufre-carbone est 90 % en poids ou plus sur la base du poids total de l'électrode positive.

8. Batterie au lithium-soufre selon l'une quelconque des revendications précédentes, dans laquelle l'électrode positive a une quantité de charge de soufre (S) de 3,6 mAh/cm$^2$ ou plus.

9. Batterie au lithium-soufre selon l'une quelconque des revendications précédentes, dans laquelle l'électrode négative a une épaisseur de 40-80 $\mu$m.

10. Batterie au lithium-soufre selon l'une quelconque des revendications précédentes, dans laquelle l'électrode positive a une quantité de charge de soufre (S) de 3,6-5,0 mAh/cm$^2$ ou plus.

11. Batterie au lithium-soufre selon l'une quelconque des revendications précédentes, dans laquelle la batterie au lithium-soufre a une densité d'énergie de 430 Wh/kg ou plus.

12. Batterie au lithium-soufre selon l'une quelconque des revendications précédentes, dans laquelle la batterie au lithium-soufre est une batterie de type poche ou une batterie cylindrique.

13. Procédé d'évaluation de la densité d'énergie d'une batterie au lithium-soufre comprenant : un ensemble électrode, un électrolyte et un boîtier recevant l'ensemble électrode, dans lequel l'ensemble électrode comprend une électrode positive comprenant un composite de soufre-carbone, une électrode négative et un séparateur disposé entre l'électrode positive et l'électrode négative ;

dans lequel le procédé comprend les étapes suivantes consistant à :

décharger la batterie au lithium-soufre à température ambiante à un état de décharge (DOD) de 15 % à 80 %, déterminer une batterie au lithium-soufre contenant un composé comprenant trois ou plus pics d'angle de diffraction caractéristiques (valeurs de 2θ) sélectionnés parmi les suivants : 7,1 ± 0,2°, 9,4 ± 0,2°, 9,6 ± 0,2°, 9,9 ± 0,2°, 10,0 ± 0,2°, 10,4 ± 0,2°, 11,0 ± 0,2°, 11,6 ± 0,2°, 12,1 ± 0,2, 13,3 ± 0,2°, 14,5 ± 0,2° et 15,0 ± 0,2° dans le motif de diffraction des rayons X (XRD), de préférence de DOD 15 % à DOD 80 %, mesurés comme décrit dans la description et

dans lequel un rapport en poids de l'électrolyte et du soufre (S) dans le composite de soufre-carbone (rapport en poids El/S) est 2,5 ou moins.

14. Procédé selon la revendication 13, dans lequel le DOD 15 % au DOD 80 % est un état ayant un potentiel de 1,7-2,2 V, et/ou

dans lequel le DOD 15 % au DOD 80 % est un état ayant une capacité de décharge par poids de soufre (S) de 150-960 mAh/g(S), et/ou
dans lequel la batterie est une batterie ayant une densité d'énergie de 430 Wh/kg ou plus.

FIG. 1)

FIG. 2)

FIG. 3)

FIG. 4)

FIG. 5)

FIG. 6A)

Example 1 (DOD 22%)

FIG. 6B)

Example 1
(DOD 22%) (peaks)

FIG. 7A)

Comparative Example 1 (DOD 22%)

2Theta (WL=0.70932 Å)

FIG. 7B)

Comparative Example 2 (DOD 22%)

CPS

2Theta (WL=0.70932 Å)

FIG. 7C)

Comparative Example 3 (DOD 22%)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUO et al.** *Ionics*, 2021, vol. 27, 3347-3356